(19) **Europäisches Patentamt / European Patent Office / Office européen des brevets**

(11) **EP 2 122 569 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(21) Anmeldenummer: **07856751.8**

(22) Anmeldetag: **14.12.2007**

(51) Int Cl.:
*G06T 1/00* *(2006.01)*

(86) Internationale Anmeldenummer:
**PCT/EP2007/011013**

(87) Internationale Veröffentlichungsnummer:
**WO 2008/071442 (19.06.2008 Gazette 2008/25)**

(54) **VERFAHREN ZUR KENNZEICHNUNG EINES DIGITALEN BILDES MIT EINEM DIGITALEN WASSERZEICHEN**

METHOD FOR MARKING A DIGITAL IMAGE WITH A DIGITAL WATERMARK

PROCÉDÉ DE CARACTÉRISATION D'UNE IMAGE NUMÉRIQUE, PRÉSENTANT UN FILIGRANE NUMÉRIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **14.12.2006 ES 200603214**
**13.04.2007 DE 102007017525**

(43) Veröffentlichungstag der Anmeldung:
**25.11.2009 Patentblatt 2009/48**

(73) Patentinhaber: **Tredess 2010, S.L.**
**15706 Santiago de Compostela (ES)**

(72) Erfinder:
- **FERNANDEZ CARNERO, José Luis**
  **15895 Teo - A Coruña (ES)**
- **REY REQUEJO, Santiago**
  **36640 Pontecesures - Pontevedra (ES)**
- **PEREZ GONZALES, Fernando**
  **36211 Vigo - Pontevedra (ES)**
- **ROCAFORT CIMADEVILA, Jorge**
  **36912 Marin - Pontevedra (ES)**
- **COMESAÑA ALFARO, Pedro**
  **36331 Vigo - Pontevedra (ES)**
- **PEREZ FREIRE, Luis**
  **36900 Marin - Pontevedra (ES)**
- **MOSQUERA NARTALLO, Carlos**
  **36210 Vigo - Pontevedra (ES)**
- **DOMINGUEZ CONDE, Gabriel**
  **36980 O Grove - Pontevedra (ES)**

(74) Vertreter: **Dosterschill, Peter**
**Dosterschill & Kollegen**
**Fichtenstrasse 11**
**85570 Ottenhofen (DE)**

(56) Entgegenhaltungen:
- **ALFARO, P.C. AND PÉREZ-GONZALEZ, F.: "Side-Informed Data Hiding: Robusteness and Security Analysis" [Online] Juni 2006 (2006-06), UNIVERSIDADE DE VIGO , ESCOLA TÉCNICA SUPERIOR DE ENXEÑEIROS DE TELECOMUNICACIÓN , XP002473522 Gefunden im Internet: URL:http://www.cspl.umd.edu/spm/eNews/eNe w s200704.html> [gefunden am 2008-03-18] Seite 173 - Seite 181**
- **ORAM C ET AL: "Fully integrated digital imaging in an access control and security system" SECURITY TECHNOLOGY, 1999. PROCEEDINGS. IEEE 33RD ANNUAL 1999 INTERNATIONAL CARNAHAN CONFERENCE ON MADRID, SPAIN 5-7 OCT. 1999, PISCATAWAY, NJ, USA,IEEE, US, 5. Oktober 1999 (1999-10-05), Seiten 191-196, XP010355698 ISBN: 0-7803-5247-5**
- **KAWAGUCHI N ET AL: "An Image Authentication Scheme Considering Privacy $#8212; A First Step towards Surveillance Camera Authentication" ADVANCED INFORMATION NETWORKING AND APPLICATIONS, 2005. AINA 2005. 19TH INTERNATIONAL CONFERENCE ON TAIPEI, TAIWAN 25-30 MARCH 2005, PISCATAWAY, NJ, USA,IEEE, 25. März 2005 (2005-03-25), Seiten 253-256, XP010790010 ISBN: 0-7695-2249-1**

- **FONDA F ET AL: "Innovative image watermarking tecnique for image authentication in surveillance applications" IMAGING SYSTEMS AND TECHNIQUES, 2005. IEEE INTERNATIONAL WORKSHOP ON MAY 13, 2005, PISCATAWAY, NJ, USA,IEEE, 13. Mai 2005 (2005-05-13), Seiten 32-35, XP010899432 ISBN: 0-7803-8922-0**

**Beschreibung**

Gebiet der Erfindung

Die vorliegende Erfindung betrifft ein Verfahren nach dem Oberbegriff des Anspruchs 1 sowie ein Verfahren nach dem Oberbegriff des Anspruchs 8.

Hintergrund der Erfindung

In einem Videoüberwachungssystem ist die Kamera ein grundlegendes Element. Derzeit werden analoge Kameras durch digitale Sicherheitskameras ersetzt. Diese sind in vielen Fällen gestaltet, um die existierenden digitalen Kommunikationsnetze zu benutzen, was zu einer Reduzierung der Installationskosten führt. Dieser Faktor ist die Ursache für eine schnelle Zunahme der Anzahl dieser Art von digitalen Systemen. Andere Vorrichtungen, die in digitalen Videoüberwachungssystemen gebräuchlich sind, sind Videoserver. Ihre Hauptfunktion ist die Digitalisierung des analogen Videosignals. Eine andere gewöhnliche Eigenschaft ist die Ausführung von Schnittstellenfunktionen zwischen analogen Kameras und digitalen Kommunikationsnetzen. Dies ermöglicht den allmählichen Übergang von einem analogen Videoüberwachungssystem zu einem digitalen.

Die Hauptserver sind die anderen Vorrichtungen, welche mit den vorstehend beschriebenen die Anordnung von Grundelementen eines digitalen Videoüberwachungssystems bilden. Ihre Hauptaufgabe ist die Konfiguration des Systems und die allgemeine Steuerung der Digitalkameras und der Videoserver. Außerdem werden darin gewöhnlich die erhaltenen Videosequenzen gespeichert.

Diese neuen digitalen Videoüberwachungssysteme sind die Ausbeute des enormen Fortschritts in den Informationstechnologien in den letzten Jahrzehnten. Parallel zu ihrer Erscheinung entstehen zahlreiche Anwendungen zur Bearbeitung von Standbildern und Videobildern. Mit ihrer Hilfe ist es nicht schwer, ein Bild derart zu verändern, dass zwischen einem Original und einer Fälschung nicht zu unterscheiden ist. Außerdem hat die Anzahl potenzieller Fälscher enorm zugenommen, da diese Bearbeitungswerkzeuge dank Internet einer großen Anzahl von Benutzern zur Verfügung stehen. Eine Folge daraus ist, dass ausgehend von einem Standpunkt der Authentizität die Echtheit der Standbilder und der digitalen Videos immer öfter in Frage gestellt wird.

Die Kennzeichnung mit digitalen Wasserzeichen ist eine der Lösungen, die zur Lösung des oben erwähnten Problems vorgeschlagen wurden. Es handelt sich um einen Satz von Techniken, die zum Einfügen von Information in ein digitales Dokument (Bild, Video, Ton usw.) verwendet werden. Die Einführung der Information wird durch Modifizieren des Originaldokuments (Gast) mit der Haupteinschränkung ausgeführt, dass die durch die Kennzeichnung erzeugte Verzerrung (je nach der Anwendung) akzeptabel ist. Einer der wesentlichen Vorteile ist, dass die eingefügten Daten mit dem Gast verknüpft sind und dass folglich kein zusätzlicher Speicher notwenig ist, wie es der Fall in der Kryptografie ist.

Zur Klassifizierung einer konkreten Technik zur Kennzeichnung mit digitalen Wasserzeichen werden verschiedene Eigenschaften verwendet. Zwei der bedeutendsten Eigenschaften sind die Robustheit und die Notwenigkeit oder Nichtnotwenigkeit des Gastes, die Extraktion der Information zu ermöglichen. Über die letztgenannte Eigenschaft sagt man, dass eine Technik blind ist, wenn der Gast zur Extraktion der Information nicht benötigt wird, und im entgegengesetzten Fall, dass sie nicht blind ist.

Bei der Videoüberwachung ist es eine unabdingbare Bedingung, dass zur Extraktion von Information keine Originalbilder benötigt werden, um die Verdoppelung der erforderlichen Speicherkapazität zu vermeiden. Folglich wird deutlich, dass eine Technik zur Kennzeichnung mit Wasserzeichen für Videoüberwachungssysteme vorzugsweise blind ist.

Eine Technik zur Kennzeichnung mit Wasserzeichen ist robust, wenn das eingefügte Zeichen den Veränderungen, die zufällig oder beabsichtigt sein können, standhält. Im entgegengesetzten Fall sind die Techniken, bei denen das Zeichen nach einer nur minimalen Veränderung korrumpiert wird, schwach. Zur Erkennung von Manipulationen von digitalen Inhalten werden die schwachen und halbschwachen Techniken angewendet, da sie den Nachweis der Authentizität des Inhalts durch Analysieren der Integrität des Zeichens ermöglichen.

Derzeit ist eine der großen Familien von Kennzeichnungstechniken mit digitalen Wasserzeichen die des Spreizspektrums, eine andere ist diejenige, die aus den so genannten Kennzeichnungstechniken mit digitalen Wasserzeichen mit lateraler Information in dem Codierer besteht. Eine besondere Eigenschaft der Spreizspektrumstechniken in blinden Schemata zur Kennzeichnung mit digitalen Wasserzeichen ist, dass sie unter Störungen des Gastes selbst leiden. Im Gegensatz dazu leiden die Techniken mit iateraier information in dem Codierer nicht unter diesen Störungen. Da es, wie oben erwähnt, unerlässlich ist, dass die Authentifizierung der Bilder eines Videoüberwachungssystems blind ist, wenden modernste Schemata Techniken mit lateraler Information in dem Codierer an.

Ein Beispiel einer Technik zur Kennzeichnung mit digitalen Wasserzeichen mit lateraler Information in dem Codierer und blinder Extraktion ist in dem Artikel von B. Chen y G. W. Wornell: "Quantization Index Modulation: A Class of Provably Good Methods for Digital Watermarking and Information Embedding", veröffentlicht in IEEE Transactions on Information Theory, Bd. 47, Nr. 4, Mai 2001, zu finden. In diesem Dokument wird die Möglichkeit der Benutzung von Quantoren zur Einfügung von Information in den Gast aufgezeigt. Grundsätzlich ist die vorgeschlagene Idee die Bereitstellung einer Anordnung von Quantoren, von denen in Abhängigkeit der Nachricht, die eingefügt werden soll, einer ausgewählt wird. Der Erhalt dieser Anordnung von Quantoren ist nicht einfach. Die Autoren schlagen eine praktische Vorgehensweise vor, um diese auf effiziente und strukturierte Weise zu erhalten. Ausgehend von einem Musterquantor werden die Rekonstruktionspunkte verlagert, so dass ein anderer Quantor erhalten wird; diese Technik wird *Dither*-Modulation genannt. Andererseits wird gezeigt, wie eine Erhöhung der Robustheit durch Verringern der Transmissionsgeschwindigkeit möglich ist. Eines der dargelegten Verfahren besteht aus der Abbildung der Werte des Gastes vor dem Einfügen des Zeichens, so dass das Rauschen, das zu dem Vektor orthogonal ist, auf den sie abgebildet werden, die Kommunikation nicht beeinflusst. In diesem Dokument wird die Technik der so genannten Verzerrungskompensation DC (*Distortion-Compensated*) vorgestellt; mit ihrer Hilfe kann der Unterschied zwischen dem gekennzeichneten Dokument und dem Originaldokument gesteuert werden. Folglich existiert ein anderer Wert, mit dem eine gültige Lösung zwischen der Robustheit des Wasserzeichens und der Nichtwahrnehmbarkeit erreicht werden kann.

Ein anderer Ansatz der Abbildung bei der Kennzeichnung mit digitalen Wasserzeichen ist in dem Artikel von Fernando Pérez-González, Félix Balado und Juan R. Hernández: "Performance analysis of existing and new methods for data hiding with known-host information in additive channels", veröffentlicht in IEEE Transactions on Signal Processing, 51(4):960-980, April 2003. Special Issue on Signal Processing for Data Hiding in Digital Media & Secure Content Delivery, zu finden. In diesem Dokument geben die Autoren einen breiter gefächerten Ausblick auf die Abbildung der Werte des Gastes, da sie eine Kompromisslösung zwischen den Techniken der Einfügung mit lateraler Information in dem Codierer und den Techniken des Spreizspektrums finden.

Eine andere praktische Umsetzung der Techniken, die auf Quantoren basieren, ist in dem Dokument von Joachim J. Eggers, Robert Bäuml, Tomas Tzschoppe und Bernd Girod: "Scalar Costa Scheme for Information Embedding", veröffentlicht in IEEE Transactions on Signal Processing, Bd. 51, Nr. 4, April 2003, zu finden. In diesem Dokument wird eine Technik dargestellt, die einer *Dither*-Modulation ähnelt, sich jedoch ausschließlich auf skalare Quantoren konzentriert.

Die vorstehend erwähnten Artikel haben als gemeinsamen Nenner den theoretischen Schwerpunkt der von ihnen vorgeschlagenen Schemata zur Kennzeichnung mit Wasserzeichen. Ein Beispiel ist die Modellierung des Rauschkommunikationskanals als ein Kanal mit additivem weißem gaußschen Rauschen, während in vielen Fällen der Kanal durch ein Quantisierungsrauschen gekennzeichnet ist, wie es der Fall bei der Kodierung von Standbildern in JPEG oder Videos in MPEG-1 ist.

Mehrere Patente konzentrieren sich auf das Gebiet der Kennzeichnung mit Wasserzeichen zur Authentifizierung von Bildern. Die Patentschrift US2004131184 hat das Ziel, die Echtheit von Videos zu beweisen, die als unwiderlegbare Beweise vor Gericht verwendet werden. Sie verwendet *Dither-QIM*-Techniken zur Kennzeichnung mit Wasserzeichen, wobei zwei Informationstypen eingeführt werden: einer ist die Identität und der andere die Steuerung. Die Identitätsinformation wird benutzt, um die Sequenz des Videos zu identifizieren, und die der Steuerung wird benutzt, um zu bestimmen, ob das Bild manipuliert wurde. Ein anderes Grundmerkmal in diesem Patent ist, dass es nur den MPEG-Standard erwähnt. Dieser Standard teilt die Koeffizienten jedes Blocks durch eine Quantisierungsmatrix, wodurch bedeutende Verzerrungen hinsichtlich der eingefügten Information zum Zeitpunkt der Komprimierung der Gruppe von Bildern auftreten, und folglich muss er eine große Menge von Koeffizienten für jeden Block verändern, um die Information einzufügen. Indem eine erhöhte Anzahl von Koeffizienten gekennzeichnet wird, ist der Unterschied zwischen dem Originalbild und dem Bild mit dem Zeichen im Normalfall relativ wahrnehmbar. Sie ist zur Umsetzung in einem tragbaren Computer für Aufzeichnungssysteme von Streifenwagen gedacht.

Das Patent EP 1 001 604 zeigt ein Verfahren zur Einführung von Information in Bilder. Es funktioniert mit Standbildern, die mit dem JPEG- oder JPEG2000-Standard codiert sind, und benutzt zur Einfügung von Information eine Abwandlung des SCS (*Scalar Costa Scheme* von Eggerst et al.). Es legt die Werte der Größe der Quantisierunsstufen fest, die zum Einfügen der information benutzt werden, wodurch folglich die Vielseitigkeit des Originalverfahrens vermindert wird. Außerdem berücksichtigt es keine Technik, welche die Einführung der Information mit einem höheren Robustheitsgrad ermöglicht, wie die Abbildungstechniken.

Ein Patent, das zum Authentifizieren von Bildflüssen zur Gewährleistung der Urheberrechte benutzt wird, ist US2003172275. Darin werden die Bilder, welche sich in dem Fluss bilden, in synchrone und asynchrone klassifiziert. In den synchronen Bildern wird ein Zeichen in die pseudozufällig ausgewählten Blöcke eingeführt. Bei der Einführung der Information benutzt es Techniken der Einfügung mit lateraler Information in dem Codierer. Aufgrund der Tatsache, dass das Zeichen nicht in das gesamte Bild eingeführt wird, ist es nicht möglich, die Veränderungen zu lokalisieren.

Ein Konzept zum Verbinden der Techniken zur Kennzeichnung mit Wasserzeichen und der Netzkameras, der Netzkameraserver oder der digitalen Videoserver ist in dem Patent US2004071311 beschrieben. Darin wird eine mögliche Lösung zum Integrieren der Kameras und des Verfahrens zur Einfügung des Wasserzeichens von einem physikalischen Standpunkt beschrieben. Derzeit gibt es zahlreiche Hersteller von Netzkameras, weshalb es praktischer ist, ein Verfahren zu gestalten, das sich perfekt an die bereit existenten Kameras anpasst, als zu versuchen, diese neu zu gestalten. Das Verfahren zur Einführung des Zeichens ist durch das Einfügen eines robusten, um die Authentizität zu beweisen, und eines schwachen, um die Veränderungen zu lokalisieren, gekennzeichnet. Dennoch wird in dem Patent kein ausreichend vollständiges Verfahren beschrieben, um die Probleme anzusprechen, die der Komprimierung in JPEG oder in einem beliebigen der MPEG-Standards eigen sind.

Aus dem vorstehend Dargelegten folgt die Notwenigkeit, eine praktische Lösung für das Problem der Erkennung und Lokalisierung von räumlichen und/oder zeitlichen Manipulationen in Standbildern oder Flüssen von Bildern zu finden, die von digitalen Videoüberwachungssystemen erzeugt werden. Hierbei muss die Lösung einen hohen Verlässlichkeits- und Sicherheitsgrad bereitstellen, so dass das in den Bildern Dargestellte unwiderlegbar ist. Eine andere notwenige Voraussetzung, die noch nicht gelöst worden ist, ist die perfekte Anpassung der Authentifizierungsverfahren an die Besonderheiten der existenten digitalen Videoüberwachungssysteme wie die Beständigkeit gegenüber Transcodierung von JPEG zu MPEG oder die Anpassbarkeit an die rechnerischen Einschränkungen der Vorrichtungen, welche diese Systeme zusammensetzen, zum Beispiel: digitale Sicherheitskameras.

Kurzdarstellung der Erfindung

Ausgehend von diesem Stand der Technik liegt der Erfindung die Aufgabe zugrunde, ein Verfahren zur Kennzeichnung eines digitalen Dokuments, insbesondere eines digitalen Bildes, mit einem digitalen Wasserzeichen zur Erkennung und Lokalisierung von räumlichen und/oder zeitlichen Manipulationen von Bildern bereitzustellen, das einen hohen Verlässlichkeitsgrad aufweist.

Die Erfindung betrifft einerseits ein Einfügungsverfahren und andererseits ein Extraktionsverfahren.

In dem Einfügungsverfahren werden in das Bild mindestens zwei Nachrichten und die Integritätsinformation eingefügt. Eine der Nachrichten ist ein Zeitbezeichner, der die Zuweisung eines Bildes in dem Moment seines Erhalts ermöglicht. Eine andere der Nachrichten ist ein eindeutiger Bezeichner der Herkunft des Bildes. Auf diese Weise kann das Verfahren zur Extraktion der Information des Bildes die Vorrichtung, welche das Bild geschaffen hat, und den Moment, in dem das Bild erstellt wurde, bestimmen und die Integrität mit der extrahierten Integritätsinformation überprüfen. Die erhaltenen Herkunftsdaten und die Zeitreferenz können gegenübergestellt werden, um ihre Gültigkeit zu überprüfen.

Die Vorrichtungen der digitalen Videoüberwachungssysteme, die zum Erstellen oder Erzeugen von Bildern fähig sind, benutzen in der Regel den Standbildstandard JPEG oder einen Videostandard der MPEG-Familie. Das System gemäß der Erfindung ist für Bilder und Videos ausgelegt, die mit diesen Standards codiert sind, wobei es gegenüber der Transcodierung zwischen ihnen resistent ist.

Die Minimierung der eingeführten Verzerrung beim Einfügen des digitalen Wasserzeichens in ein Bild ist eine intrinsische Einschränkung der Erfindung, da der Inhalt überprüft und nicht modifiziert werden soll. Dies wird erreicht, indem die Verfahren an das Rauschen angepasst werden, das in den Kommunikationskanal eingeführt wird und für die Codierung von Bildern in den oben erwähnten Standards typisch ist. Dementsprechend wird die Information in die transformierte Domäne DCT der Blöcke des Bildes eingeführt, konkret in einige vorbestimmte Koeffizienten. Das Ziel ist die Reduzierung der Veränderung der vorbestimmten Koeffizienten und der Anzahl von Koeffizienten, die zum Einführen des Zeichens mit einer bestimmten Verlässlichkeit notwenig sind. In diesem Sinne haben die Verfahren der Erfindung einen klaren Vorteil, da die Erzeugung und Einfügung des Zeichens das Quantisierungsrauschen berücksichtigen, das die Information erleiden wird, die eingeführt wird.

Von einem funktionellen Standpunkt ist der erste Teil des Verfahrens zur Einfügung von Information der Erfindung die Auswahl der Blöcke des Bildes und der Koeffizienten jedes Blocks, welche jedes Bit jeder Nachricht und die Integritätsinformation aufweisen. Eine effiziente Lösung und außerdem Gewährleistung, dass der Nachrichtenaustausch geheim ist, ist die Auswahl der Blöcke des Bildes mit einem Geheimschlüssel. Die Auflösung der Erkennung und Lokalisierung der Manipulationen steht in enger Beziehung zu den Blöcken, in welche die Integritätsinformation eingeführt wird; wenn diese Information in das gesamte Bild eingefügt wird, können die Veränderungen in dem gesamten Bild erkannt und lokalisiert werden.

Der zweite Teil besteht aus der Abbildung der Werte der Koeffizienten, die für die Nachrichten und die Integritätsinformation ausgewählt werden, auf Abbildungsvektoren, wobei die Größe der abgebildeten Vektoren, welche die Vektoren sind, die aus dem Abbildungsprozess folgen, ein variabler Parameter des Verfahrens ist. Zur Erhöhung des Datenschutzes können die Abbildungsvektoren der Nachrichten mit einem Geheimschlüssel erzeugt werden. Um den Abbildungsvektor zu erstellen, auf den die Koeffizienten abgebildet werden, welche die Integritätsinformation enthalten, wird eine Funktion benutzt, deren Parameter eine der Nachrichten und der Geheimschlüssel ist. Eine dieser Nachrichten ist die Zeitreferenz oder der Zeitstempel, womit die Integritätsinformation eines Bildes von dem Moment seines Erhalts abhängt. Aufgrund der Existenz diese Zeitabhängigkeit können keine gekennzeichneten Bilder aus vorherigen Momenten benutzt werden, um eine Videosequenz zu fälschen, da der Zeitstempel nicht mit dem Zeitraum übereinstimmt und dieser Fälschungsversuch erkannt werden wird. Die ausgewählte Größe der abgebildeten Vektoren ermöglicht, ein Gleichgewicht zwischen der Robustheit des Zeichens und der Transmissionsgeschwindigkeit zu erreichen. Außerdem können die Werte, welche jeden der Abbildungsvektoren bilden, auf welche die Koeffizienten abgebildet werden, die jedes Bit der Nachrichten oder jeden Teil der Integritätsinformation aufweisen, gemäß den Werten der Quantisierungstabelle, die zum Codieren der Koeffizienten im JPEG-Standard oder einem der MPEG-Standards benutzt wird, oder gemäß einer beliebigen anderen Tabelle gewichtet werden, die aus Wahrnehmungsaspekten erhalten wird.

Der dritte Teil bei der Einfügung ist die Quantisierung der Werte der abgebildeten Vektoren mit einem Quantor, der aus einer Anordnung entsprechend dem Wert des Bits der Nachricht oder dem Teil der Integritätsinformation, die eingeführt werden soll, ausgewählt wird. Jeder Quantor wird erzeugt, indem ein Prototyp modifiziert und ein Verlagerungsvektor gemäß dem Wert, der eingegeben werden soll, benutzt wird. Um diesen Vektor zu erhalten, werden ein Geheimschlüssel für den Fall der Nachrichten und der Geheimschlüssel und der Wert der Nachrichten benutzt, von denen dieser abhängen muss.

Der letzte Teil des Einfügungsverfahrens besteht aus der Aktualisierung jedes Koeffizienten der ausgewählten Blöcke des Bildes, um die Nachrichten und die Integritätsinformation zu tragen, mit dem Ergebnis der Quantisierung der abgebildeten Vektoren. Durch das Kennzeichnen in den Werten der abgebildeten Werte wird erreicht, dass das orthogonale Rauschen für jeden der Abbildungsvektoren keinen Einfluss auf den Nachrichtenaustausch hat und folglich zu einer Erhöhung der Robustheit führt.

Das Extraktionsverfahren, das in der Erfindung vorgeschlagen wird, ermöglicht das Extrahieren der Nachrichten und Bestimmen, ob das Bild räumlich und/oder zeitlich manipuliert worden ist. Das Einfügungs- und das Extraktionsverfahren stimmen in der Art und Weise überein, auf welche sie die Blöcke des Bildes und die Abbildung der Koeffizienten mit dem Geheimschlüssel auswählen. Folglich können ohne Kenntnis des Geheimschlüssels keine rekonstruierten Nachrichten erhalten werden.

Nach Erhalt der Vektoren mit den abgebildeten Werten der Nachrichten und der Integritätsinformation wird die Extraktion der Information vorgenommen. Dies wird durch Unterziehen dieser Vektoren einer synchronisierten Quantisierung mittels des Schlüssels erreicht. Durch die Analyse der Abstände zu jedem Zentroid des Ergebnisses der Quantisierung werden die rekonstruierten Nachrichten erhalten und für jeden Block wird mit der Integritätsinformation über die Echtheit desselben entschieden. Um bezüglich der Integrität des Bildes eine Entscheidung treffen zu können, ist es notwenig, zur Synchronisation der Extraktion den Geheimschlüssel und die Nachricht zu verwenden, von der er als Synchronisationselement der Extraktion abhängt. Im Normalfall ist die Nachricht eine Zeitreferenz. Wenn die Zeitreferenz nicht mit der Integritätsinformation übereinstimmt, werden die Blöcke des Bildes als gefälscht angezeigt. Wenn die Zeitreferenz und das Zeichen übereinstimmen, wird bestätigt, dass der Wert der Zeitreferenz innerhalb der erlaubten Schwellenwerte liegt; anderenfalls zeigt das Verfahren an, dass eine Unterbrechung der Sequenzialität einer Gruppe von Bildern aufgetreten ist.

Im Hinblick auf den Robustheitsgrad ist der Einfügung der Nachrichten ein höherer Robustheitsgrad zugewiesen als der Integritätsinformation. Diese Eigenschaft folgt aus der Notwendigkeit für eine perfekte Decodierung der Nachrichten, die zum Bestimmen der Integrität des Bildes notwenig sind. Ohne diese Nachrichten ist, wie gesagt, eine Synchronisation und folglich das Treffen einer korrekten Entscheidung über die Echtheit der Blöcke des Bildes unmöglich. Andererseits muss die Integritätsinformation gegenüber jeglicher Änderung, welche nicht die Verzerrung ist, die der JPEG- oder MPEG-Codierung eigen ist, sehr sensibel sein und folglich eine geringe Robustheit aufweisen.

Eine weiterer Vorteil der Erfindung ist die hohe Betriebssicherheit des dargestellten Systems. Dies wird erreicht, indem bewirkt wird, dass die Erzeugung der Integritätsinformation für ein konkretes Bild in einem konkreten Moment und einer konkreten Vorrichtung ohne Kenntnis des Geheimschlüssels ein rechnerisch unlösbares Problem ist. Außerdem ist die Bestimmung des Geheimschlüssels, der zum Einfügen der Information benutzt wird, durch Analysieren der Standbilder oder gekennzeichneten Videos auch rechnerisch schwierig, was einen hohen Sicherheitsgrad bereitstellt.

Die Erfindung ermöglicht die Umsetzung des Einfügungsverfahrens in die Netzkameras, welche ein digitales Videoüberwachungssystem bilden, wobei diesen Netzkameras im Hinblick auf die verfügbaren Rechenressourcen hohe Einschränkungen auferlegt sind. Um dies in Angriff nehmen zu können, ist das vorgeschlagene System in der Weise ausgestaltet, dass die Anzahl von Berechnungen und Speicherzugriffen minimiert wird. Zum Beispiel lädt die Kennzeichnung in der transformierten Domäne die zahlreichen Befehlszyklen der Berechnung der transformierten auf die CPU herunter. Ein anderes Beispiel ist die Benutzung einer niedrigeren Anzahl von Koeffizienten, um die Information durch Minimieren der Anzahl von Werten zur Ausführung der Berechnung einzufügen, sowie eine Wahrnehmungsverbesserung.

Die Erfindung ermöglicht in vorteilhafter Weise eine außerordentlich große Vielseitigkeit, wobei das System derart konfiguriert werden kann, dass eine Kompromisslösung zwischen Geschwindigkeit, Verzerrung, eingegebenem Datenvolumen und/oder Fehlerrate erreicht werden kann. Einer der möglichen konfigurierbaren Parameter ist die Anzahl von Koeffizienten, die mit jedem Informationsbits der Nachrichten oder jedem Teil der Integritätsinformation in Verbindung stehen. Die Beziehung zwischen der Länge zwischen dem ursprünglichen Vektor und dem abgebildeten Vektor ist eine weitere Möglichkeit. Der Steuerfaktor der Verzerrung ist der Wert, der am genauesten ermöglicht, das Verfahren zwischen der Verzerrung und der Wahrscheinlichkeit der Erkennung eines Fehlers auszugleichen, wobei diese zwei Eigenschaften bei der Anwendung entgegengesetzt sind. Eine andere Möglichkeit ist die Verwendung von Kanalcodierern in den Nachrichten; auf diese Weise wird die Robustheit durch Verringern der Fehlerrate erhöht.

Andere Vorteile und Merkmale des Verfahrens werden in den Figuren offensichtlich, die in Verbindung mit der nun folgenden Beschreibung dargestellt sind.

Kurzbeschreibung der Zeichnungen

Die Erfindung wird nun beispielhaft anhand der im folgenden beschriebenen Zeichnungen erläutert, wobei die Erfindung, die sich auf digitale Dokumente bezieht, im Zusammenhang mit digitalen Bildern beschrieben wird. Es zeigen:

- FIG. 1 schematisch die allgemeine Struktur des Systems, das die Erfindung umfasst.
- FIG. 2 in einem Schema die Module, in welche das Einfügungsverfahren aufgeteilt ist.
- FIG. 3 in einem Schema die Module, in welche das Extraktionsverfahren aufgeteilt ist.
- FIG. 4 ein Flussdiagramm des Einführungsverfahrens einer Nachricht mit der IP-Adresse in ein Bild.
- FIG. 5 ein Flussdiagramm des Einführungsverfahrens einer Nachricht mit einer Zeitreferenz in ein Bild.
- FIG. 6 ein Flussdiagramm des Einführungsverfahrens der Integritätsinformation in ein Bild.
- FIG. 7 ein Flussdiagramm des Extraktionsverfahrens einer Nachricht mit einer IP-Adresse aus einem Bild.
- FIG. 8 ein Flussdiagramm des Extraktionsverfahrens einer Nachricht mit einer Zeitreferenz aus einem Bild.
- FIG. 9 ein Flussdiagramm des Integritätsüberprüfungsverfahrens eines Bildes.
- FIG. 10 die Aufteilung eines Bildes in Blöcke und Makroblöcke sowie die Zickzack-Anordnung der Koeffizienten.
- FIG. 11 die Auswahl und Anordnung der Koeffizienten der Blöcke, welche einen Integritätsmakroblock bilden.
- FIG. 12 ein Diagramm des Einfügungsverfahrens eines digitalen Wasserzeichens mit lateraler Information in dem Codierer.
- FIG. 13 schematisch ein Diagramm in einer digitalen Netzkamera, wobei das Einfügungsverfahren gemäß der vorliegenden Erfindung umgesetzt wird.
- FIG. 14 schematisch ein Datenverarbeitungssystem, das die Verfahren mit Manipulationserkennung gemäß der vorliegenden Erfindung ausführt, wobei die Verbindung zwischen den Vorrichtungen eines digitalen Videoüberwachungssystems dargestellt ist.

Bevorzugte Ausführungsform der Erfindung

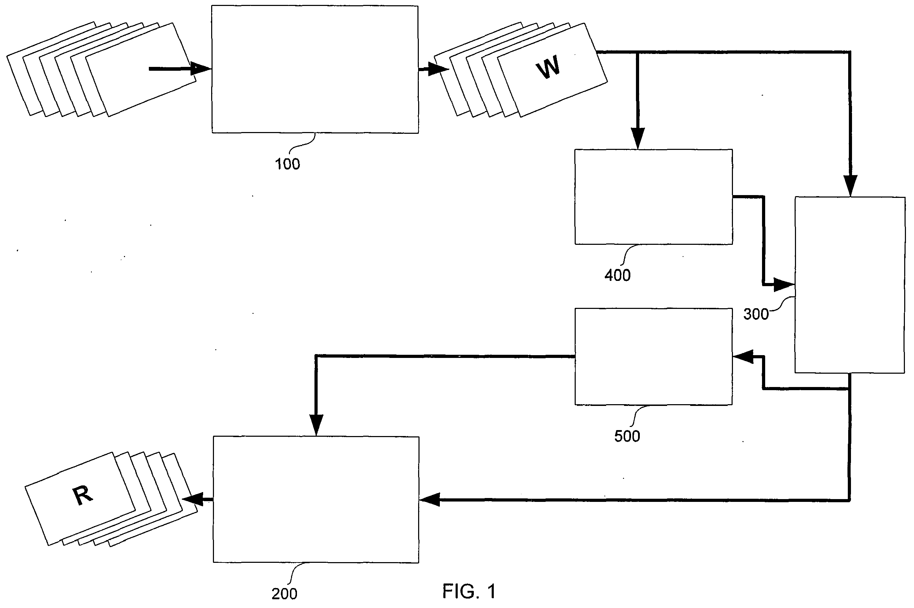

FIG. 1 zeigt schematisch die einzelnen Elemente, welche die ausgewählte bevorzugte Ausführungsform der vorliegenden Erfindung umfasst. In diesen Elementen wird eine Sequenz von Bildern, die von einem digitalen Videoüberwachungssystem erhalten wird, Techniken zur Kennzeichnung mit digitalen Wasserzeichen unterzogen, welche die Lokalisierung und Erkennung von räumlichen und/oder zeitlichen Veränderungen, welchen sie ausgesetzt worden sind, ermöglichen.

Nachdem eine digitale Netzkamera en digitales Bild erhalten hat, wird dieses in einem Codierer 100 verarbeitet, wobei das Verfahren zur Einfügung eines digitalen Wasserzeichens gemäß der vorliegenden Erfindung ausgeführt wird. Das gekennzeichnete Bild kann als Teil eines Videos mit einem der MPEG-Standards oder als ein einzelnes codiertes Bild gemäß dem JPEG-Standard gespeichert werden, wobei es in beiden Fällen in einer Speichereinheit 300 gespeichert wird. Falls gewünscht wird, eine Sequenz einzelner gekennzeichneter Bilder, welche ein MPEG-Video bilden, zu speichern, wird sie in einem MPEG-Codierer 400 codiert.

Die Überprüfung der Integrität der gekennzeichneten Bilder beginnt mit der Wiederherstellung der Bilder, die einzeln oder in Form eines MPEG-Videos gespeichert sind, aus der Speichereinheit 300. Wenn der Bildfluss mit einem der MPEG-Standards codiert ist, wird die Information der Bilder in einem MPEG-Decoder 500 extrahiert. In einem Decoder 200, der das Verfahren zur Kennzeichnung mit Wasserzeichen mit Manipulationserkennung gemäß der Erfindung umsetzt, wird er verarbeitet, um die Veränderungen der information, die aus dem MPEG-Decoder 500 oder den einzelnen Bildern, die in der Speichereinheit 300 gespeichert sind, erhalten werden, zu erkennen und zu lokalisieren.

Die Daten, die von dem Decoder 200 erzeugt werden, beziehen sich auf die Herkunft des gekennzeichneten Bildes, auf den Zeitpunkt, in dem es erstellt wurde, auf die erkannten Veränderungen usw. Außerdem kann er konfiguriert werden, um ein resultierendes Bild zu erzeugen, wobei die gefundenen Modifikationen angezeigt werden.

Standbild- und Videostandards

In den Verfahren zur Einfügung und Extraktion von Wasserzeichen sind die berücksichtigten Codierungsstandards JPEG für das Standbild und die Standards der MPEG-Familie für das Video.

Einer der Gründe zum Einsatz des JPEG-Standards bei der Codierung von Standbildern dieser Ausführungsform ist die gute Beziehung zwischen der erreichten Größenreduzierung und der eingeführten Verzerrung. Ein anderer Grund ist seine hauptsächliche Verwendung in derzeitigen digitalen Videoüberwachungssystemen, wobei ermöglicht wird, dass sich die vorliegende Erfindung perfekt an diese anpasst.

Unter den Standbildern, welche eine Sequenz bilden, ist die existierende Redundanz hoch. Dieser Faktor kann ausgenutzt werden, um eine deutliche Reduzierung der Größe zu erreichen, wobei eine höhere Effizienz der Speicherung erreicht wird. In den Verfahren gemäß der vorliegenden Erfindung wird zur Codierung einer Sequenz von Bildern ein Mitglied der Familie der MPEG-Standards benutzt. Dies beruht auf den zahlreichen Übereinstimmungen zwischen den MPEG-Standards und dem JPEG-Standard, was ermöglicht, dass sich die vorgeschlagenen Verfahren ohne weiteres an beide anpassen.

Der JPEG-Standard benutzt als Farbraum aus drei Bestandteilen den $YC_bC_r$ Die Bestandteile sind die Helligkeit (Y) und die Farben ($C_b$ und $C_r$). Jeder Bestanteil des Bildes wird in sich nicht überlagernde Blöcke von 8x8-Proben aufgeteilt. JPEG benutzt ein Koordinatenveränderung mit dem Ziel, dass sich der Großteil der Energie in einer geringeren Anzahl von Abmessungen als die Originaldarstellung (RGB) konzentriert, wobei diese Tatsache zur Reduzierung der Größe des Bildes genutzt wird. Konkret benutzt JPEG die diskrete Kosinus-Transformation (DCT) in jedem Block des Bildes der Bestandteile Y, $C_b$ oder $C_r$ Jeder transformierte Block $B_i$ des Bildes wird der Quantisierung der 64 Koeffizienten $c_j$ unterzogen, welche ihn bilden, wobei sie durch Elemente $q_j$ geteilt werden, welche eine JPEG-Quantisierungsmatrix $Q_{JPEG}$ mit Abmessungen von 8□8 bilden, wobei als Ergebnis quantisierte Koeffizienten $c_{quant,j}$ erhalten werden, was wie folgt dargestellt werden kann

$$c_{quant,j} = \text{round}(c_j / q_j)_,$$

worin in dem vorstehenden Ausdruck round() eine Funktion bezeichnet, die den nächsten ganzen Wert zurückgibt. Auf die quantisierten Koeffizienten $c_{quant,j}$ der Blöcke $B_i$ wird eine Entropiecodierung ohne Verluste angewendet, um die JPEG-Datei mit dem Bild zu erzeugen, wobei die Codierung besonders zur effizienten Speicherung derjenigen $c_{quant,j}$ ausgelegt ist, deren Wert null ist.

Um die rekonstruierten transformierten Blöcke $\hat{B}_i'$ welche das Bild bilden, wiederherzustellen, muss ein Quantisierungsumkehrprozess ausgeführt werden. Jeder quantisierte Koeffizient $c_{quant,j}$, der zu jedem $\hat{B}_i$ gehört, muss mit seinem jeweiligen Element $q_j$ von $Q_{JPEG}$ multipliziert werden, das heißt,

$$\hat{c} = c_{quant,j} \cdot q_j .$$

Aus der Art und Weise, auf welche ein Bild im JPEG-Standard codiert und decodiert wird, folgt, dass, je größer die Werte der JPEG-Quantisierungsmatrix $Q_{JPEG}$ sind, desto größer die eingeführte Verzerrung ist, obwohl auch die Komprimierung größer sein wird. Die Energie des Bildes konzentriert sich in den niedrigsten Frequenzen der transformierten Blöcke des Bildes, wobei andererseits das menschliche Sehsystem gegenüber diesen Frequenzen empfindlicher ist, weshalb diese Eigenschaften bei der Erzeugung von $Q_{JPEG}$ berücksichtigt werden müssen, um eine gute JPEG-Codierung zu erhalten, indem die kleineren Größen der Quantisierungsstufen den niedrigsten Frequenzen zugewiesen werden. Oftmals ist das diesbezügliche Ergebnis der Anwendung von $Q_{JPEG}$, dass zahlreiche der höchsten Frequenzen null sind, wobei, wie oben erwähnt, eine bedeutende Reduzierung der Größe erreicht.

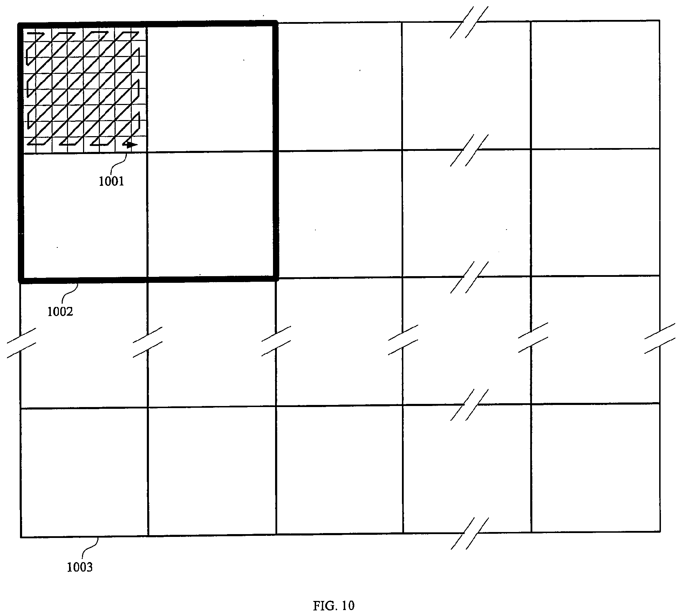

FIG. 10 zeigt die Aufteilung der Bilder 1003 im JPEG-Standard, wobei Blöcke von 8x8 Pixeln 1001 gebildet werden. Außerdem ist die Zickzack-Anordnung der Koeffizienten dargestellt, welche die Blöcke bilden, wobei sie durch einen Pfeil dargestellt ist, der in dem Koeffizienten in Position (1,1) (DC-Koeffizienten) beginnt und in dem Koeffizienten (8,8) endet.

In der vorliegenden Beschreibung der bevorzugten Ausführungsform wird berücksichtigt, dass die JPEG-Bilder, welche einen Fluss von Bildern bilden, die von einem Videoüberwachungssystem erhalten werden, mit dem MPEG-1-Standard komprimiert werden. Eine MPEG-1-Videosequenz umfasst verschiedene Bildtypen wie die Typen I, B und P. Entsprechend dieser Eigenschaft sind die Bilder, die das Zeichen enthalten, die codierten des Typs I und P, wobei diejenigen des Typs B ohne Zeichen codiert sind, damit sie einer größeren Komprimierung standhalten.

Wenn eine Sequenz von einzelnen Standbildern als ein MPEG-1-Fluss codiert wird, wird ein Codierungsmuster benutzt. Zur Erläuterung wird das Muster IBBBBPBBBB in Betracht gezogen. Dieses Muster zeigt an, dass das erste Bild mit einem Bild des Typs I, die vier folgenden des Typs B, danach als Typ P und die vier letzten als Typ B codiert sind. Die vorgeschlagenen Verfahren zur Kennzeichnung mit Wasserzeichen benutzen die gekennzeichneten, als B codierten Bilder nicht. Wenn der Komprimierungsgrad eines Videos von gekennzeichneten Bildern erhöht werden soll, muss der Anteil der als Typ B codierten Bilder erhöht werden. Folglich nimmt die Anzahl von I- und P-Bildern des Flusses und damit die Fähigkeit zur Erkennung von Veränderungen ab. Wenn eine digitale Netzkamera mit Hilfe des oben erwähnten Musters gekennzeichnete Bilder mit einer Geschwindigkeit von 10 pro Sekunde erzeugt und sie in dem MPEG-Codierer 400 codiert werden, können Veränderungen nur mit einer Auflösung von 0,2 s erkannt werden. Dementsprechend ist es notwenig, in dem Moment, in dem der Benutzer des Systems die MPEG-1-Codierung konfiguriert, zu einem Kompromiss zwischen dem Komprimierungsgrad und der zeitlichen Auflösung der Veränderungen zu gelangen.

Bildbezogene Information

In der vorliegenden bevorzugten Ausführungsform der Erfindung besteht das eingefügte Zeichen aus einer Nachricht von Metadaten, einer Nachricht mit einer Zeitreferenz und der Integritätsinformation.

In der Nachricht von Metadaten kann jede beliebige willkürliche Information in das Bild eingefügt oder daraus extrahiert werden. Als erläuterndes, jedoch nicht einschränkendes Beispiel wird ein eindeutiger Bezeichner des Erzeugungselementes der Videoüberwachungsbilder benutzt. Aufgrund des gewöhnlichen Kontextes, in dem sich ein digitales Videoüberwachungssystem befindet, wird in der vorliegenden Ausführungsform die IP-Adresse ausgewählt. Es sei darauf hingewiesen, dass zahlreiche Alternativen als eindeutiger Bezeichner existieren, wie zum Beispiel: Seriennummer, MAC (aus dem Englischen Media Acess Control) usw.

Die Information wird in das digitale Bild in die transformierten Koeffizienten der Helligkeitsblöcke eingeführt, welche das Bild bilden. Die Blöcke, in welche die Integritätsinformation eingeführt wird, werden in Makroblöcke gruppiert. Die Abmessungen der Makroblöcke zur Einfügung der Integritätsinformation sind konfigurierbar und bestimmen folglich die Granulation der Erkennung der räumlichen Veränderungen. Je größer der Makroblock, desto schwieriger ist die Anzeige der konkreten Punkte des Bildes, die modifiziert worden sind, obwohl diese Option den Vorteil der Möglichkeit der Benutzung einer größeren Anzahl von Koeffizienten zur Bestimmung der Echtheit bietet. Zum Beispiel kann ein Makroblock der Integritätsinformation aus 2x2 Blöcken gebildet sein. In FIG. 10 ist ein Makroblock 1002 dargestellt, der bei der Erkennung räumlicher Veränderungen benutzt wird.

Module des Codierers

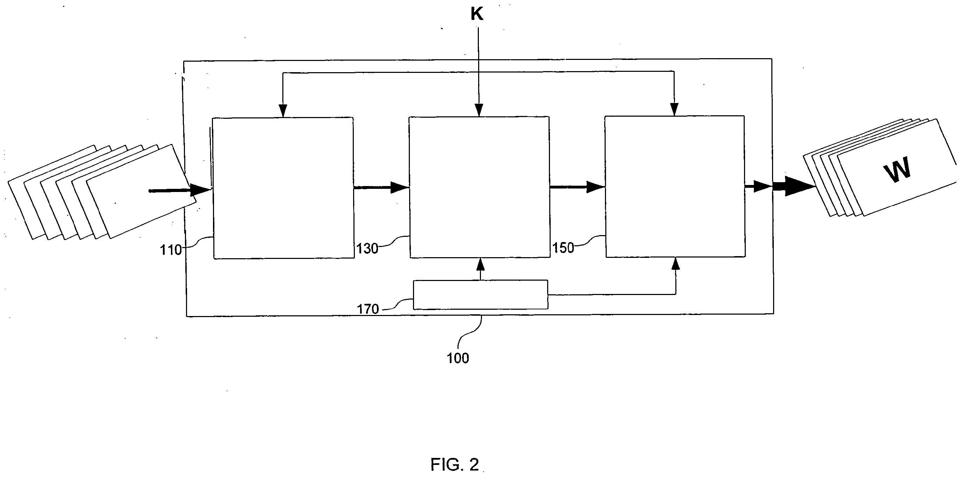

In FIG. 2 ist der innere Aufbau des Codierers 100 dargestellt, der aus einem Einfügungsmodul der IP-Adresse (Metadaten) 110, einem Einfügungsmodul der Zeitreferenz 130, einem Einfügungsmodul der Integritätsinformation 150 und einem Verzeichnis mit dem Wert der Zeitreferenz 170 besteht.

Wenn ein mit dem JPEG-Standard codiertes Bild in den Codierer 100 eingeführt wird, wird es in dem Einfügungsmodul der IP-Adresse 110 verarbeitet, um in jedes Bild eine IP-Adresse der Vorrichtung des digitalen Videoüberwachungssystems einzuführen, die es erhalten hat. Danach wird das Bild zu dem Einfügungsmodul der Zeitreferenz 130 geleitet, um die Zeitreferenz (gespeichert in dem Verzeichnis 170) in das Bild einzuführen; mit dieser Information kann man den Moment erfahren, in dem das Bild erhalten wurde, und außerdem bestimmen, ob die Reihenfolge einer Sequenz von Bildern (zeitliche Veränderungen) verändert worden ist. Jedes Bild in dem Ausgang des Moduls 130 wird zu dem Einfügungsmodul der Integritätsinformation 150 geleitet; in diesem Modul wird die Integritätsinformation eingeführt, wodurch räumliche Veränderungen erkannt werden können. Bei der Einfügung von Integritätsinformation wird die Zeitreferenz des Verzeichnisses 170 benutzt, damit ein Bild nicht mittels eines anderen gefälscht werden kann, da die Integritätsinformation in einem anderen Moment, der nicht dem der Erzeugung entspricht, nicht gültig ist. Die Module 110, 130 und 150 benutzen einen Geheimschlüssel K, so dass die Einführung dieser zwei Nachrichten oder der Integritätsinformation ohne den Schlüssel ein rechnerisch sehr kompliziertes Problem ist.

Module des Decoderers

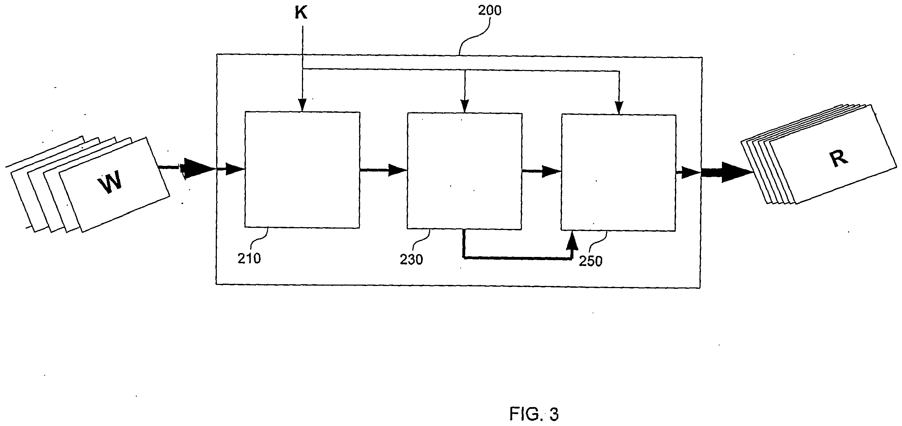

FIG. 3 zeigt den inneren Aufbau des Decoders 200, der aus einem Extraktionsmodul der IP-Adresse 210, einem Extraktionsmodul der Zeitreferenz 230 und einem Extraktionsmodul der Integritätsinformation 250 besteht.

Das Extraktionsmodul der IP-Adresse 210 stellt die IP-Adresse, die in das Bild eingefügt worden ist, wieder her. Das Extraktionsmodul der Zeitreferenz 230 stellt die Zeitreferenz, die mit dem Bild verbunden ist, wieder her. Das Extraktionsmodul der Integritätsinformation 250 stellt die Integritätsinformation wieder her und bestimmt, ob ein Bild räumlich manipuliert worden ist, das heißt, ob ein Einzelbild des Originalbildes modifiziert worden ist. Wenn das Bild manipuliert wurde, kann das Extraktionsmodul der Integritätsinformation 250 ein Bild erzeugen, das die Position der erkannten Veränderungen grafisch anzeigt. Die Extraktionsmodule 210, 230 und 250 benutzen den gleichen Geheimschlüssel K zur Extraktion der Information wie den, der zum Einführen der Information benutzt wird.

Innere Anordnung des Codierers und des Decoders

Obwohl die inneren Entwürfe des Codierers 100 und des Decoders 200 aus FIG. 2 und FIG. 3 eine Kaskadenschaltung zwischen den Modulen zeigen, ist diese Merkmal nicht einschränkend. Es ist möglich, die Module parallel anzuordnen oder sogar zu einem einzigen Modul zu gruppieren.

Codierer

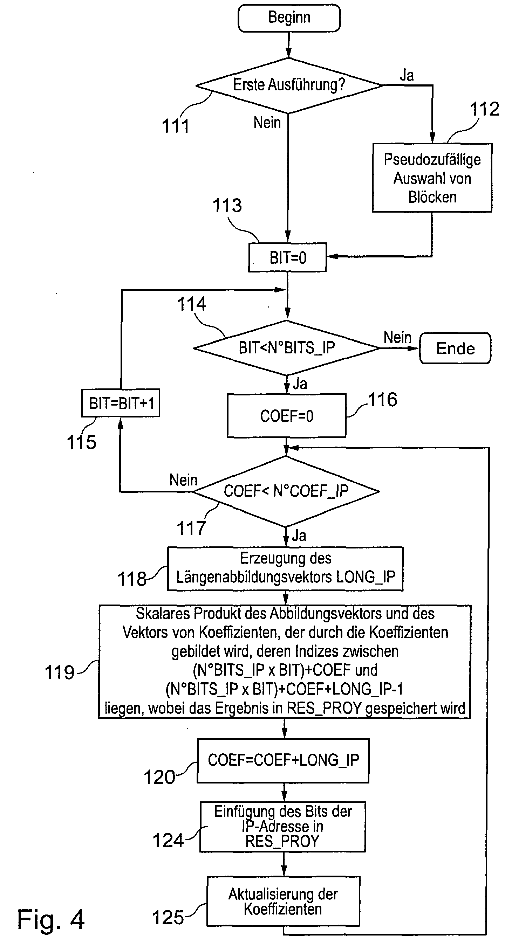

FIG. 4, FIG. 5 und FIG. 6 stellen das Flussdiagramm der Verfahren der Einfügungsmodule dar, welche den Codierer 100 bilden und in FIG. 2 dargestellt sind.

Die Flussdiagramme sind mittels der Zuweisung von Werten bestimmten Parametern des Verfahrens konfigurierbar. Einer der Parameter des Verfahrens ist die Anzahl von Koeffizienten des Bildes pro benutztes Informationsbit im Falle der Nachrichten oder die Anzahl von Koeffizienten jedes Makroblocks zur Einführung der Integritätsinformation. In den Diagrammen sind sie für den Fall der Nachricht mit IP-Adresse, Nachricht mit Zeitreferenz und mit Integritätsinformation jeweils durch N°COEF _IP, N°COEF_REF oder N°COEF_INT dargestellt ("N°" = Anzahl). Ein anderer Parameter des Einführungsdiagramms der Nachrichten ist die Anzahl von Informationsbits jeder Nachricht, die in den Diagrammen im Falle der IP-Adresse und der Zeitreferenz jeweils durch N°BITS_IP und N°BITS_REF dargestellt sind. Eine andere mögliche Art und Weise zum Konfigurieren des Verfahrens ist mittels des Abschnitts der Blockkoeffizienten, die benutzt werden, um die Nachricht mit der IP-Adresse (Metadaten), die Nachricht mit der Zeitreferenz und die Integritätsinformation einzufügen. Die Größe der Abbildungsvektoren, auf welche die Werte der Koeffizienten abgebildet werden, aus denen die abgebildeten Werte erhalten werden, in welche die Information eingefügt wird, ist ein weiterer konfigurierbarer Wert, wobei er für die IP-Adresse, die Zeitreferenz und die Integritätsinformation jeweils durch LONG_IP, LONG_REF und LONG_INT dargestellt wird.

FIG. 4 zeigt das Flussdiagramm des Einfügungsmoduls der IP-Adresse (Metadaten) 110, in dem jedes Bild, das von einem Videoüberwachungssystem erhalten wird, verarbeitet wird. Wenn das Verfahren (Schritt 111) zum ersten Mal in einem Fluss von Bildern ausgeführt wird, werden in Schritt 112 (gemäß dem Geheimschlüssel K) die transformierten 8x8-Blöcke von Koeffizienten, in die das Bild aufgeteilt ist, pseudozufällig ausgewählt. In Schritt 113 wird die Variable BIT initialisiert, die zum Bestimmen der Anzahl von Bits der Nachricht der IP-Adresse benutzt wird, die in das Bild eingeführt worden sind. In Schritt 114 wird entschieden, ob bereits alle Bits dieser Nachricht in das Bild eingeführt worden sind; wenn die Antwort positiv ist, ist der Einfügungsteil der IP-Adresse in das Bild abgeschlossen. Anderenfalls wird zu Schritt 116 übergegangen, in dem der Zähler von Koeffizienten pro Bit COEF auf null eingestellt wird. In Schritt 117 wird bestimmt, ob der Wert des Bits BIT bereits in die ihm zugeordneten Koeffizienten N°COEF_IP eingeführt worden ist; falls ja, wird in Schritt 115 zu einem Wert des Zählers BIT eins addiert und zu dem oben beschriebenen Schritt 114 zurückgekehrt. Wenn die Koeffizienten des Bildes, die mit diesem Bit der IP-Adresse verbunden sind, noch nicht verändert worden sind, wird in Schritt 118 ein pseudozufälliger Abbildungsvektor (gemäß einem Geheimschlüssel K) der Länge LONG_IP erzeugt. Nach Erhalt des Abbildungsvektors wird in Schritt 119 das skalare Produkt zwischen dem Abbildungsvektor und dem Vektor berechnet, der aus den ausgewählten Koeffizienten (in Schritt 112) besteht, deren Indizes zwischen (N°BITS_IPxBIT)+COEF und (N°BITS_IPxBIT)+COEF+LONG_IP-1 sind, wobei das Ergebnis der Abbildung in RES_PROY gespeichert wird. In Schritt 120 wird LON_IP zu dem Wert COEF addiert, der zur Bestimmung der Koeffizienten verwendet wird, die bei der Berechnung der folgenden Abbildung benutzt werden. In Schritt 124 wird der Wert des Bits BIT der IP-Adresse in RES_PROY eingefügt und in Schritt 125 werden die Koeffizienten, mit denen die derzeitige Abbildung berechnet wurde, mit dem Ergebnis aktualisiert, das in dem vorhergehenden Schritt (124) erhalten wurde.

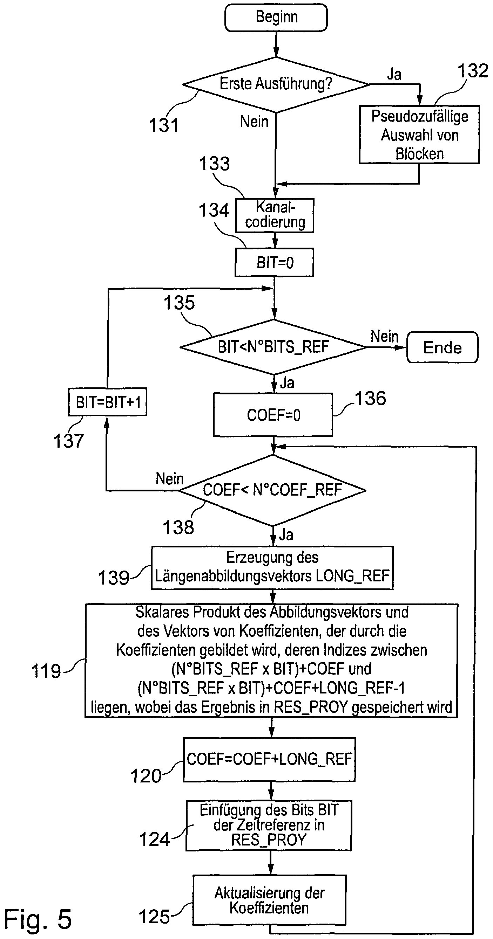

FIG. 5 zeigt das Flussdiagramm des Einfügungsmoduls der Zeitreferenz 130. Genau wie in FIG. 4 wird am Anfang ein digitales Bild eingegeben, das von dem Videoüberwachungssystem erhalten wird. In Schritt 131 wird bestimmt, ob das Verfahren für diesen bestimmten Datenfluss zum ersten Mal ausgeführt wird. Falls ja, werden in Schritt 132 (gemäß dem Geheimschlüssel K) die Blöcke des Bildes, die die Nachricht mit der Zeitreferenz aufweisen werden, pseudozufällig ausgewählt. In Schritt 133 wird die Nachricht mit der Zeitreferenz einer Kanalcodierung unterzogen, deren Ziel die Erhöhung der Robustheit ist und die eine codierte Nachricht der Zeitreferenz hervorbringt. In Schritt 134 wird die Variable BIT auf null gestellt, die zum Steuern der Anzahl von Bits der codierten Nachricht der Zeitreferenz benutzt wird, die in das Bild eingeführt worden sind. In Schritt 135 wird überprüft, ob die codierte Nachricht der Zeitreferenz komplett in das Bild eingefügt worden ist; dafür wird überprüft, ob der Wert von BIT geringer ist als die Anzahl der Gesamtbits, die zur Einfügung der codierten Nachricht mit der Zeitreferenz N°BITS_REF zugeordnet worden sind. Falls diese Bedingung nicht erfüllt wird, ist die Arbeit des Einfügungsmoduls der Zeitreferenz 130 beendet. Falls noch Bits der Zeitreferenz einzufügen sind, wird in Schritt 136 der Wert COEF auf null gestellt. Die Variable COEF wird benutzt, um die Anzahl von Koeffizienten zu steuern, die aus dem Bit BIT der codierten Nachricht der Zeitreferenz eingeführt worden sind. In Schritt 138 wird gegebenenfalls überprüft, ob die N°COEF_REF-Koeffizienten berechnet worden sind, die zum Aufnehmen jedes Bits der Zeitreferenz zugewiesen sind. Falls sie bereits vollendet worden sind, wird in Schritt 137 der Wert von BIT aktualisiert, indem eins hinzuaddiert wird, was anzeigt, dass danach die Einfügung des nächsten Bits der codierten Nachricht der Zeitreferenz ausgeführt wird. Falls noch nicht alle Koeffizienten benutzt worden sind, die jedem Bit der Zeitreferenz entsprechen, wird von Schritt 138 zu 139 übergegangen. In Schritt 139 wird ein Längenabbildungsvektor LONG_REF erzeugt, der mit dem Geheimschlüssel pseudozufällig erhalten wird. Dieser Abbildungsvektor wird benutzt, um die Werte der nächsten Koeffizienten LONG_REF abzubilden. In Schritt 140 wird das skalare Produkt zwischen dem Abbildungsvektor (in Schritt 139 erhalten) und einem Vektor berechnet, der aus den in Schritt 132 ausgewählten Koeffizienten besteht, deren Indizes zwischen (N°BITS_REFxBIT)+COEF und (N°BITS_REFxBIT)+COEF+LONG_REF-1 liegen, wobei das Abbildungsergebnis in RES_PROY gespeichert wird. In Schritt 144 wird zu dem Wert COEF der Wert LONG_REF addiert. Danach wird in Schritt 145 das Bit der codierten Nachricht der Zeitreferenz, deren Index BIT ist, in den abgebildeten Wert RES_PROY eingefügt. In Schritt 146 werden die Koeffizienten, die zum Berechnen der derzeitigen Abbildung benutzt wurden, mit dem Wert RES_PROY aktualisiert, der das Ergebnis von Schritt 145 ist.

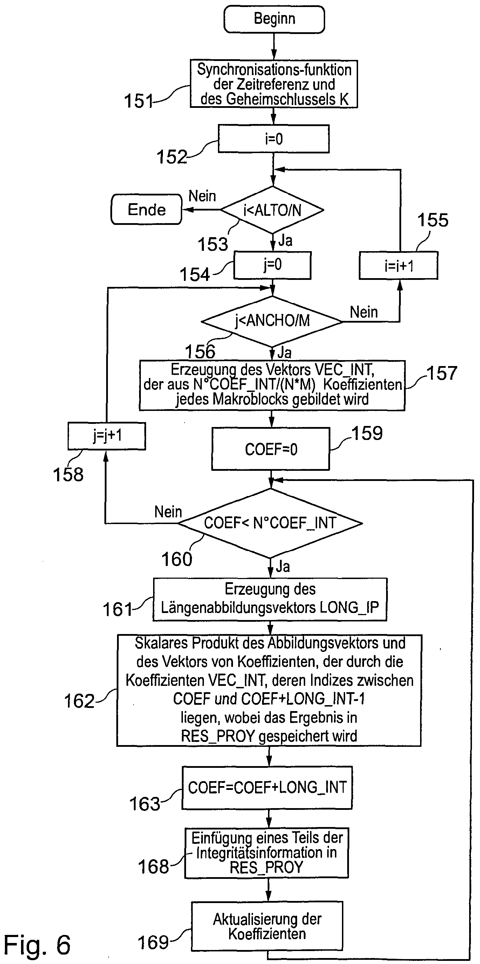

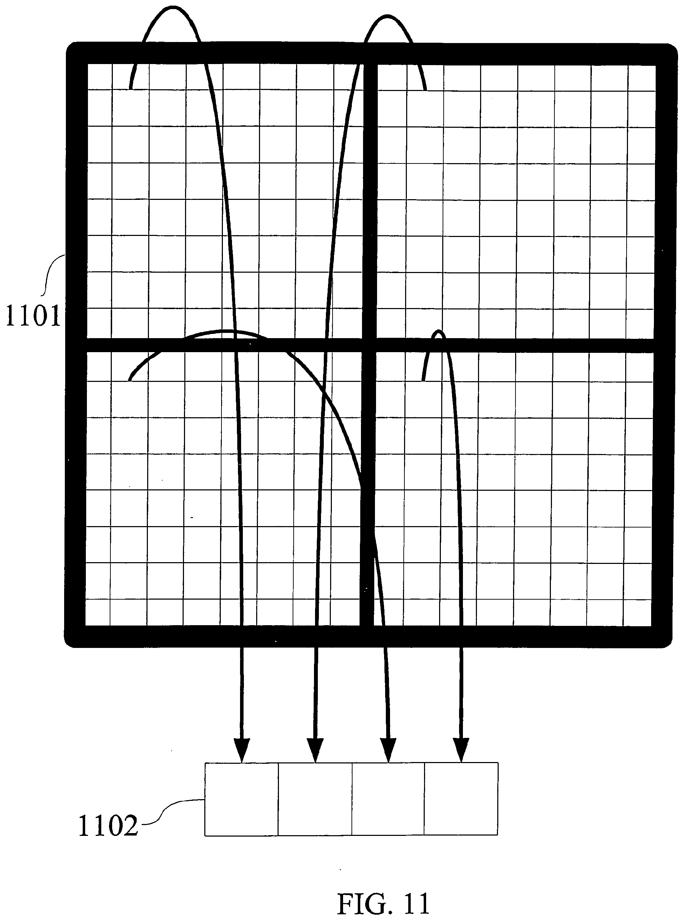

FIG. 6 zeigt das Flussdiagramm, das dem Einfügemodul der Integritätsinformation 150 entspricht. Dieses Verfahren weist als Parameter den Wert der Zeitreferenz auf, die von dem Einfügemodul der Zeitreferenz 130, die von dem Verzeichnis 170 und dem Geheimschlüssel K erhalten wird, in das Bild eingeführt wird. In Schritt 151 wird das Verfahren synchronisiert, um zu erreichen, dass die Einführung der Integritätsinformation in das Bild von dem Moment abhängt, in dem das gerade verarbeitete Bild erstellt wurde, und außerdem wird bei der Synchronisation der Geheimschlüssel K benutzt, um zu gewährleisten, dass nur befugte Benutzer die gültige Integritätsinformation einführen können. Falls die Zeitreferenz nicht bekannt ist, ist der Prozess des Eingebens der Integritätsinformation, ohne dass der Decoders 200 aus FIG. 1 erkannt wird, sehr komplex. In Schritt 152 wird der Indexwert i festgelegt, dessen Funktion es ist, die Makroblockreihe zu zählen, in welcher sich das Einfügeverfahren während seiner Ausführung befindet. In dieser Figur wird die Breite der Blöcke (8x8) des Bildes als ANCHO und die Höhe der Blöcke als ALTO, die Breite der Blöcke jedes Makroblocks als M und die Höhe der Blöcke jedes Makroblocks als N bezeichnet. In Schritt 153 wird überprüft, ob die Integritätsinformation bereits in das gesamte Bild eingegeben worden ist, und falls ja, wird das Einfügeverfahren der Integritätsinformation so beendet. Wenn die Gesamtheit des Bildes noch nicht berechnet worden ist, wird in Schritt 154 der Indexwert der Spalten von Makroblöcken j auf null gestellt. In Schritt 156 wird überprüft, ob bereits alle Spalten von Makroblöcken der derzeitigen Reihe von Makroblöcken, der Reihe i, berechnet worden sind. Falls sie bereits berechnet worden sind, wird in Schritt 155 eine Einheit zu dem Index i addiert, um die nächste Reihe von Makroblöcken zu verarbeiten oder den Prozess zu beenden, was in Schritt 153 entschieden wird. Wenn das Ergebnis der in Schritt 156 getroffenen Entscheidung ist, dass noch Makroblöcke der Reihe i zu verarbeiten sind, wird in Schritt 157 ein Vektor VEC_INT der Länge N°COEF _INT erzeugt, wobei aus jedem Block, der den Makroblock von Koordinaten (i,j) des Bildes bildet, N°COEF_INT-Koeffizienten entnommen werden. Die Anordnung der Koeffizienten jedes Blocks in dem Vektor VEC_INT ist im Hinblick auf die Position der Blöcke in dem derzeitigen Makroblock von links nach rechts und von oben nach unten, wie in FIG. 11 dargestellt. Die Anordnung der Koeffizienten, die zu jedem Block in dem Vektor VEC_INT gehören, folgt der Reihenfolge der Koeffizienten gemäß der Zickzack-Anordnung dieser Koeffizienten selbst in dem Block. In dem nächsten Schritt 159 wird der Wert COEF auf null gestellt. Danach wird in Schritt 160 überprüft, ob die Integritätsinformation bereits in den derzeitigen Makroblock (i,j) eingefügt worden ist, und falls ja, wird in Schritt 158 eine Einheit zu j addiert und zu Schritt 156 übergegangen. Wenn entschieden wird (Schritt 160), dass noch Blöcke zu kennzeichnen sind (COEF<N°COEF_INT), wird mit Schritt 161 fortgefahren. In Schritt 161 wird ausgehend von der Zeitreferenz und dem Geheimschlüssel ein Längenabbildungsvektor LON_INT pseudozufällig erzeugt, wobei die Erzeugung dieses Vektors das Ergebnis der Synchronisation ist, die in Schritt 151 von FIG. 6 ausgeführt worden ist. In Schritt 162 wird die Abbildung berechnet, wobei das skalare Produkt zwischen dem (in Schritt 161 erhaltenen) Abbildungsvektor und dem Vektor berechnet wird, der aus den Koeffizienten VEC_INT mit Indizes zwischen COEF und COEF+LONG_INT-1 besteht, wobei das Ergebnis dieser Abbildung in RES_PROY gespeichert wird. In Schritt 163 wird der Wert LON_INT zu dem Wert COEF addiert. Danach wird das Verfahren in Schritt 168 fortgesetzt. Hier wird der Wert dieses Teils der Integritätsinformation in den Wert RES_PROY eingefügt, der das Ergebnis der Abbildung der Koeffizienten des Bildes auf den Abbildungsvektor ist. In Schritt 169 werden die Koeffizienten, die zum Berechnen der derzeitigen Abbildung benutzt werden, mit dem gekennzeichneten Wert RES_PROY aktualisiert, der das Ergebnis von Schritt 168 ist.

Decoder

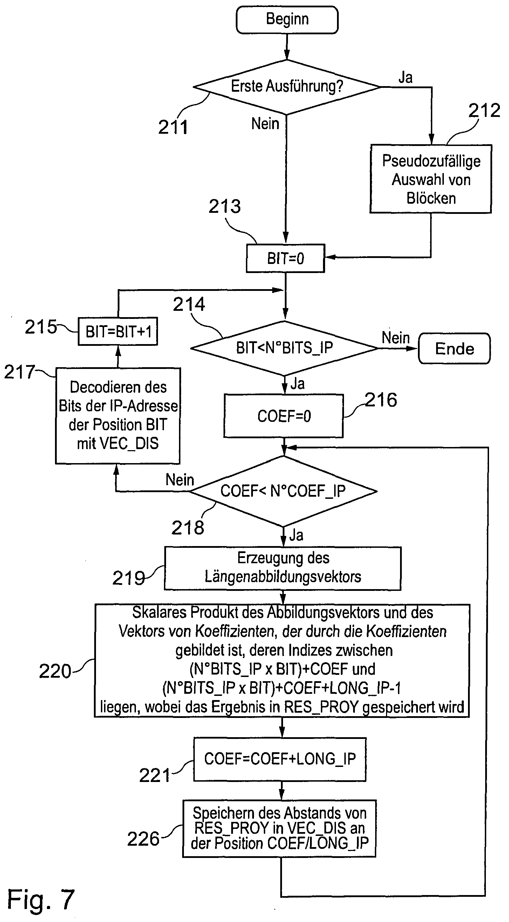

In FIG. 7, FIG. 8 und FIG. 9 sind Flussdiagramme der Verfahren dargestellt, die in den Extraktionsmodulen ausgeführt werden, welche den Decoder 200 bilden und in FIG. 3 dargestellt sind. Die Werte der verwendeten Parameter in dem Codierer 100 müssen die gleichen sein wie diejenigen, die der Decoder 200 benutzt. Zum Beispiel: N°COEF_IP, ANCHO, M, N°BITS_REF usw.

FIG. 7 zeigt das Flussdiagramm des Extraktionsverfahrens der IP-Adresse entsprechend dem Extraktionsmodul der IP-Adresse (Metadaten) 210. Am Anfang liegt ein digitales Bild vor, aus dem das Modul 210 die IP-Adresse extrahieren wird. In dem ersten Schritt (211) wird überprüft, ob das Flussdiagramm in der Sequenz, zu welcher das Bild gehört, das verarbeitet wird, zum ersten Mal ausgeführt wird. Falls ja, werden in Schritt 212 mit dem Geheimschlüssel K die Blöcke des JPEG-Bildes, aus denen die Nachricht mit der IP-Adresse extrahiert wird, pseudozufällig ausgewählt. Im nächsten Schritt 213 wird der Wert BIT auf null gestellt. Dieser Wert ermöglicht die Steuerung der Anzahl von Bits der Adresse, die extrahiert werden. In Schritt 214 wird überprüft, ob die Gesamtheit von Bits der Nachricht mit der IP-Adresse wiederhergestellt wurden; falls ja, wird die Extraktion der IP-Adresse des derzeitigen Bildes beendet, das in diesem Modul verarbeitet wird. Falls die Gesamtanzahl von Bits, welche die IP-Adresse bilden, N°BITS_IP, noch nicht verarbeitet worden ist, wird in Schritt 216 der Wert COEF auf null gestellt. Der Wert COEF ist ein Zähler der Anzahl von Koeffizienten, die benutzt worden sind, um den Wert des Bits BIT der IP-Adresse wiederherzustellen. Die Entscheidung, ob bereits die gesamten Koeffizienten N°COEF_IP benutzt worden sind, die zum Extrahieren des Wertes eines Bits der IP-Adresse notwenig sind, wird in Schritt 218 getroffen. Falls ja, wird in Schritt 217 mittels eines Vektors VEC_DIS der Länge N°COEF_IP/LONG_IP, der aus den in Schritt 226 gespeicherten Werten besteht, der Wert des Bits BIT der IP-Adresse bestimmt. In Schritt 215 wird der Wert der Variable BIT aktualisiert, um mit der Extraktion der IP-Adresse fortzufahren oder diese zu beenden, was in Schritt 214 entschieden wird. Schritt 219 wird erreicht, wenn die in 218 getroffene Entscheidung ist, dass noch Koeffizientengruppen zu verarbeiten sind, um den Wert des Bits BIT der IP-Adresse berechnen zu können. In Schritt 219 wird ein Längenabbildungsvektor LONG_IP erzeugt, wobei dieser Vektor demjenigen entsprechen muss, der in 118 von FIG. 4 erzeugt wird, wobei hierzu der Wert des Geheimschlüssels K bekannt sein muss. In Schritt 220 wird die Abbildung mittels des skalaren Produkts zwischen dem Abbildungsvektor und einem Vektor berechnet, der aus den (in Schritt 212 ausgewählten) Koeffizienten besteht, deren Indizes zwischen (N°BITS_IPxBIT)+COEF und (N°BITS_IPxBIT)+COEF+LONG_IP-1 liegen, um schließlich den Wert in RES_PROY zu speichern. In Schritt 221 wird der Wert LONG_IP zu COEF addiert. In Schritt 226 wird in der Position COEF/LONG_IP des Vektors VEC_DIS das Ergebnis der Berechnung des Abstands zwischen RES_PROY und einem Referenzvektor gespeichert. Diese letzte Berechnung wird später in dieser Beschreibung der bevorzugten Ausführungsform ausführlich beschrieben.

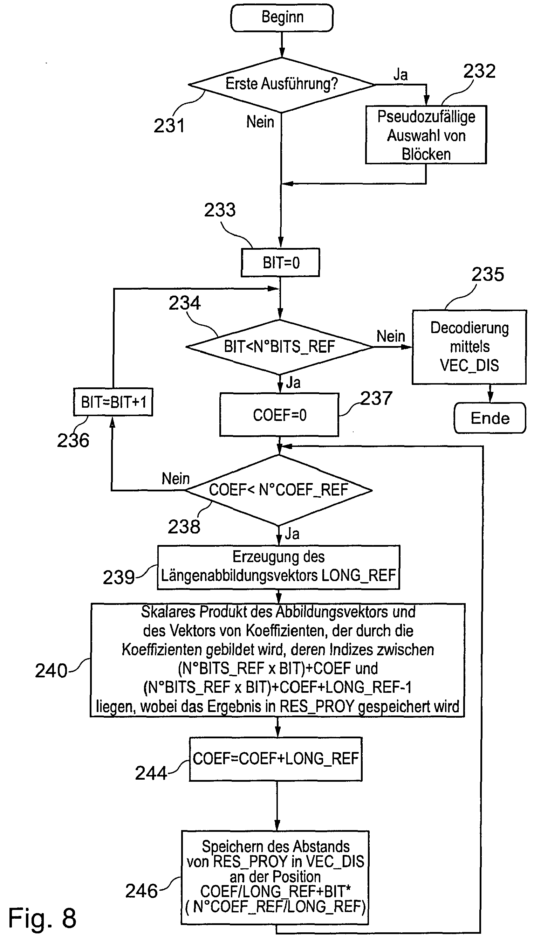

FIG. 8 zeigt das Flussdiagramm des Extraktionsmoduls der Zeitreferenz 230. Genau wie in den vorherigen beschriebenen Flussdiagrammen liegt anfangs ein digitales Bild vor, aus dem die Zeitreferenz, mit der es verbunden ist, extrahiert werden soll. Der erste Schritt (231) des Diagramms bestimmt, ob es sich um die erste Extraktion des Bildes des vorliegenden Bildflusses handelt, und falls ja, wird zu Schritt 232 übergegangen, und anderenfalls zu Schritt 233. In Schritt 232 werden mit dem Geheimschlüssel K die Blöcke des codierten Bildes, die zur Extraktion der Zeitreferenz benutzt werden, pseudozufällig ausgewählt. In Schritt 233 wird der Wert BIT auf null gestellt; mit diesem Wert kann man wissen, wann der Extraktionsprozess der Zeitreferenz in dem Bild beendet ist. In Schritt 234 wird bestimmt, ob bereits alle Bits der Nachricht der Zeitreferenz in dem Bild extrahiert worden sind, wonach zu Schritt 235 übergegangen wird, oder, falls noch welche vorhanden sind, wird zu Schritt 237 übergegangen. Schritt 235 besteht aus einem Kanaldecoder, welcher den Wert der Nachricht der Zeitreferenz erhält und in dem die Werte des Vektors VEC_DIS verarbeitet werden, wobei es sich hier um den Umkehrprozess von Schritt 133 aus FIG. 5 handelt. Nach der Kanaldecodierung ist das Ende des in dem Flussdiagramm beschriebenen Prozesses erreicht. In Schritt 237 wird der Wert null in COEF eingeführt, der als Zähler der Anzahl der Koeffizienten benutzt wird, die in einem bestimmten Moment benutzt werden, um die Metrik zu extrahieren, die dem Bit BIT der codieren Nachricht der Zeitreferenz entspricht. In Schritt 238 wird bestimmt, ob bereits alle Koeffizienten berechnet worden sind, die zum Extrahieren der Metrik benutzt werden, die einem Bit der codierten Nachricht der Zeitreferenz entsprechen. Falls bereits alle Koeffizienten, die mit einem bestimmten Bit BIT in Verbindung stehen, berechnet worden sind, wird eine Einheit zu dem Wert BIT addiert, um gegebenenfalls die Werte RES_PROY des nächsten Bits der Nachricht zu berechnen. Falls noch nicht alle Koeffizienten, die zur Extraktion der in das Bild eingefügten Information bezüglich eines Bits notwenig sind, verarbeitet worden sind, wird zu Schritt 239 übergegangen. In Schritt 239 wird ein Längenabbildungsvektor LONG_REF erzeugt, auf den die Werte der Koeffizienten abgebildet werden. In Schritt 240 wird das skalare Produkt zwischen dem Abbildungsvektor und einem Vektor berechnet, der aus den (in Schritt 232 zur Einfügung der Zeitreferenz ausgewählten) Koeffizienten besteht, deren Indizes zwischen (N°BITS_REFxBIT)+COEF und (N°BITS_REFxBIT)+COEF+LONG_REF-1 liegen, wobei der erhaltende Wert in RES_PROY gespeichert wird. In Schritt 244 wird der Wert COEF durch Addieren zu LONG_REF aktualisiert. In Schritt 246 wird für den Wert RES_PROY der Abstand bezüglich eines Referenzvektors berechnet, dessen Ergebnis in einem Vektor VEC_DIS an der Position COEF/LONG_REF+BITx(N°COEF_REF/LONG_REF) gespeichert wird, wobei VEC_DIS in Schritt 235 benutzt wird, um die Nachricht der Zeitreferenz zu bestimmen, wie oben erwähnt. Die Art und Weise der Berechnung des Abstands von RES_PROY wird später in der Beschreibung erläutert.

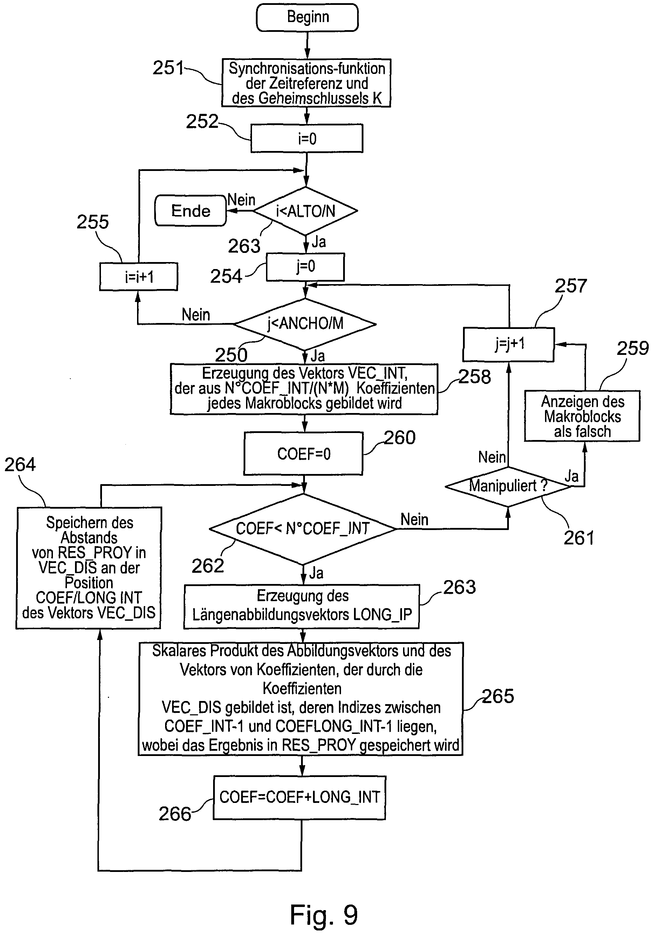

FIG. 9 zeigt das Flussdiagramm, das dem Extraktionsmodul der Integritätsinformation 250 entspricht. Dieses Verfahren weist als Parameter die Zeitreferenz, welche in dem Modul 230 extrahiert wird, und den Geheimschlüssel K auf; ohne den korrekten Wert der Zeitreferenz könnte die Integritätsinformation nicht wiederhergestellt werden, wobei das Bild als Fälschung angezeigt würde, da es nicht mit der Zeitreferenz übereinstimmt, die mit der Integritätsinformation verknüpft ist. Das Flussdiagramm weist eingangs ein Bild auf, aus dem die Integritätsinformation extrahiert wird und dessen räumliche Echtheit überprüft wird. In Schritt 251 wird das Verfahren mit der Zeitreferenz und dem Geheimschlüssel K synchronisiert, was eine korrekte Erzeugung der pseudozufälligen Werte ermöglicht, die für den vorliegenden Extraktionsprozess notwenig sind. In Schritt 252 wird der Index i, der von dem Verfahren benutzt wird, um zu erfahren, in welcher Reihe von Makroblöcken er sich befindet, auf den Wert null eingestellt. In Schritt 253 wird bestimmt, ob die Extraktion der Integritätsinformation ihr Ende erreicht hat, indem überprüft wird, ob bereits alle Reihen der Makroblöcke berechnet worden sind. Wenn noch nicht alle Reihen berechnet worden sind, wird in Schritt 254 der Wert j festgelegt, der die Steuerung der Anzahl von Spalten von Makroblöcken einer Reihe von Makroblöcken i, die berechnet worden sind, ermöglicht. In Schritt 254 wird bestimmt, ob die Integritätsinformation bereits aus allen Spalten von Makroblöcken, welche jede Reihe bilden, extrahiert worden ist. Falls ja, wird in Schritt 255 eine Einheit zu dem Zähler addiert und zu Schritt 253 zurückgekehrt. Falls noch nicht alle Spalten berechnet worden sind, wird in Schritt 258 der Vektor von Koeffizienten des Makroblocks mit Koordinaten (i,j) erzeugt, der zur Extraktion der Integritätsinformation benutzt wird. Die Art und Weise der Erzeugung des Vektors ist die gleiche wie die vorher in Schritt 157 aus FIG. 6 dargestellte. In Schritt 260 wird der Wert COEF auf null gestellt, was das Steuern der Anzahl von Koeffizienten, die zur Extraktion der Information von jedem Makroblock benutzt werden, ermöglicht. Die Entscheidung, ob bereits alle Koeffizienten eines Makroblocks berechnet worden sind, wird in Schritt 262 getroffen. Falls ja, wird in Schritt 261 der Abstandsvektor VEC_DIST analysiert und bestimmt, ob der Makroblock manipuliert worden ist; falls ja, wird zu Schritt 259 übergegangen. Die Funktion von Schritt 259 ist es, einen Makroblock als falsch anzuzeigen; dies kann durch sichtbares Markieren des Makroblocks und/oder Ausgeben eines Signals erreicht werden, das es einem Benutzer ermöglicht zu wissen, dass dieser Makroblock verändert worden ist. Wenn in Schritt 261 nicht bestimmt wird, dass der untersuchte Block manipuliert worden ist, wird das Verfahren genau wie nach Schritt 259 mit Schritt 257 fortgesetzt. In Schritt 257 wird zu dem Zähler 1 eine Einheit addiert, wodurch angezeigt wird, dass die Extraktion der Integritätsinformation eines Makroblocks beendet ist. Wenn andererseits in Schritt 262 bestimmt wird, dass die Integritätsinformation, die diesem Makroblock entspricht, noch nicht wiederhergestellt worden ist, wird zu Schritt 263 übergegangen. In Schritt 263 wird ein Längenabbildungsvektor LON_INT erzeugt, der mit dem Generator in 161 in FIG. 6 synchronisiert ist. Seine Erzeugung hängt von der Zeitreferenz und dem Schlüssel ab, weshalb mit hoher Wahrscheinlichkeit bestimmt wird, dass der Makroblock falsch ist, wenn die Zeitreferenz oder der Geheimschlüssel nicht bekannt ist. In Schritt 265 wird das skalare Produkt zwischen dem Abbildungsvektor und einem Vektor berechnet, der aus Koeffizienten VEC_INT mit Indizes zwischen COEF und COEF+LONG INT-1 besteht, wobei das Ergebnis der Abbildung in RES_PROY gespeichert wird. In Schritt 266 wird der Wert COEF durch Addieren zu dem Wert LONG_INT aktualisiert. Nach Beendigung der derzeitigen Abbildung wird das Verfahren in Schritt 264 fortgesetzt. In diesem Schritt wird der Wert, der sich aus der Berechnung des Abstands zwischen RES_PROY und einem Referenzvektor ergibt, in die Position eingegeben, die aus der Division COEF/LONG_INT des Abstandsvektors VEC_DIST resultiert. Die Erläuterung der Berechnung des Abstands folgt später in der Beschreibung.

Pseudozufällige Auswahl von Blöcken

In der vorliegenden Ausführungsform werden die transformierten DCT-Blöcke, welche die Nachrichten eines digitalen codierten Standbildes gemäß dem JPEG-Standard aufweisen, pseudozufällig ausgewählt. Dies wird in den Schrittpaaren 112 (FIG. 4) - 212 (FIG. 7) und 132 (FIG. 5) -232 (FIG. 8) jeweils für die Nachricht mit der IP-Adresse und die Nachricht mit der Zeitreferenz ausgeführt. Wenn die ausgewählten Blöcke bei der Codierung und Decodierung nicht die gleichen sind, sind die wiederhergestellten Daten ungültig.

Die Auswahl wird durch Permutieren der Blöcke, welche das Bild bilden, mittels eines Generators pseudozufälliger Zahlen ausgeführt, in dem als Kern der Wert des Geheimschlüssels oder eine Funktion davon verwendet wird. Die transformierten Blöcke des Bildes werden durch Bilden eines Vektors von Blöcken gemäß der Anordnung von links nach rechts und von oben nach unten bezüglich der Position der Blöcke in dem Bild angeordnet. Mit dem pseudozufälligen Generator wird die Position jedes Blocks in dem Vektor von Blöcken permutiert, wodurch ein ungeordneter Vektor von Blöcken erhalten wird.

Die Koeffizienten der Blöcke, welche den Vektor ungeordneter Blöcke für jede der Nachrichten bilden, die in dem Bild versteckt sein werden, werden festgelegt. Die mit jeder Nachricht verbundenen Koeffizienten werden durch Bilden eines Vektors von Koeffizienten c angeordnet. Der Vektor von Koeffizienten der Nachricht mit der IP-Adresse ist durch $c_{IP}$ gekennzeichnet und weist eine Länge N°BITS_IPxN°COEF_IP auf. Die Nachricht mit der Zeitreferenz wird durch $c_{REF}$ mit einer Länge N"BITS_REFxN°COEF_REF gekennzeichnet.

Wenn die Vektoren oder die Abbildungsmatrizen nicht orthogonal sind, müssen die Anordnungen von Koeffizienten, die mit jeder Nachricht assoziiert sind, disjunktiv sein. Falls dies nicht erfüllt wird, würden sich die Einfügungsprozesse jeder Nachricht gegenseitig stören und die eingefügte Information könnte nicht wiederhergestellt werden.

Die pseudozufällige Auswahl der Blöcke kann vorgenommen werden, wenn jedes Bild verarbeitet wird, und nicht nur am Anfang eines Bildflusses. Diese Möglichkeit hat den Nachteil, dass die Ausführungszeit der Einfügung oder Extraktion zunimmt, weshalb diese Lösung nicht ratsam ist, wenn zeitliche Einschränkungen vorliegen.

Synchronisationsfunktion der Zeitreferenz und des Geheimschlüssels

Die Synchronisation der Einfügung und Extraktion der Integritätsinformation wird in den Schritten 151 (FIG. 6) und 251 (FIG. 9) ausgeführt. Der Geheimschlüssel K wird benutzt, um zu gewährleisten, dass die Integritätsinformation von einem befugten Benutzer des Systems eingegeben wird. Die Synchronisation mit dem Zeitsiegel wird mit dem Ziel umgesetzt, eine Abhängigkeit zwischen dem Einfügungsprozess der Integritätsinformation und dem Wert der Zeitreferenz zu schaffen. Folglich ist es nicht möglich, Bilder zu benutzen, die zu einem vorherigen Zeitpunkt gekennzeichnet worden sind, um ein Bild zu fälschen, das zu einem anderen Zeitpunkt erhalten wird, ohne erkannt zu werden. Diese Synchronisation wird durch Initialisieren eines pseudozufälligen Integritätsgenerators mit einem Wert erreicht, der eine Funktion der Zeitreferenz und des Geheimschlüssels ist. Der pseudozufällige Generator wird in dem Teil benutzt, welcher der Integritätssteuerung bei dem Erhalt von Werten in den Schritten 161 (FIG. 6) und 168 (FIG. 6) bei der Einführung, 263 (FIG. 9) und 264 (FIG. 9) bei der Extraktion entspricht.

Erzeugung der Abbildungsvektoren

Die Schrittpaare 118 (FIG. 4) -219 (FIG. 7) der Nachricht mit der IP-Adresse, 139 (FIG. 5) -239 (FIG. 8) der Nachricht der Zeitreferenz und 161 (FIG. 6) -263 (FIG. 9) der Integritätsinformation erzeugen die Abbildungsvektoren $p_{IP}$, $p_{REF}$ und $p_{INT}$ der jeweiligen Länge LONG_IP, LONG_REF und LONG_INT. Die Abbildungsvektoren werden pseudozufällig erhalten, wobei sie von dem Geheimschlüssel für die Nachrichten oder der Zeitreferenz und dem Geheimschlüssel für die Integritätsinformation abhängig gemacht werden.

Der erste Schritt zur Erzeugung von Abbildungsvektoren ist die Erzeugung eines Vektors, dessen gesamte Elemente auf eins eingestellt sind, und die pseudozufällige Bestimmung des Zeichens der Elemente des Vektors. Danach wird eine Maske zum Erhalt des Abbildungsvektors angewendet. Die Maske kann gemäß psychovisuellen menschlichen Eigenschaften oder einer anderen Voraussetzungsart erzeugt werden.

Ein Beispiel zur Erzeugung der Maske ist es, sie so zu erzeugen, dass das Gewicht der Koeffizienten bei der Abbildung aus der Perspektive des JPEG-Standards das gleiche ist; dafür werden die Werte der Maske als Funktion der Beziehung der Größe der Quantisierungsstufen erzeugt, die der JPEG-Quantisierung jedes Koeffizienten zugeordnet sind. Oben wurde erwähnt, dass jeder Koeffizient der 8x8-Blöcke, in welche ein Bild im JPEG-Standard aufgeteilt ist, einer Quantisierung unterzogen wird, wobei die Größe der Stufe des Quantors eine Funktion der Position in dem Block ist. Folglich wir die Maske derart erzeugt, dass bei der Abbildung der Koeffizienten auf den Abbildungsvektor der Wert der Maske derart ist, dass das Produkt der JPEG-Quantisierungsstufe jedes Koeffizienten mit dem Wert der Maske, welche ihn multipliziert, konstant ist. Diese Entzerrung wird erreicht, indem in der Maske der größte Wert (zum Beispiel 1) dem Element zugewiesen wird, das mit dem Koeffizienten verbunden ist, der mit der kleinsten Stufe quantisiert wird, und indem bewirkt wird, dass der Rest der Elemente des Vektors zu diesem proportional ist. Wenn einem Koeffizienten zum Beispiel eine Stufengröße zugeordnet ist, deren Wert das Doppelte von dem des kleinsten Koeffizienten ist, stünde ihm in der Maske die Hälfte des Wertes zu, der dem kleinsten zugeordnet ist. Wenn als genauer gesagt nur ein Koeffizient jedes Blocks gekennzeichnet würde, um eine bestimmte Nachricht einzuführen, wäre die erzeugte Maske ein Vektor, dessen Elemente denen der Einheit entsprechen. Diese Art und Weise der Erzeugung der Maske ist in dem folgenden Beispiel dargestellt

$$c_{quant.} = \{1,1,2,1\}$$

$$q = \{5,5,6,6\}.$$

In dem vorherigen Fall steht $c_{quant}$ für den Vektor, der aus den quantisierten Koeffizienten gebildet ist; der Vektor q steht für die Werte der JPEG-Quantisierungsmatrix, mit denen die quantisierten Quantoren $c_{quant.}$erhalten werden. Dementsprechend gilt für die Maske m

$$m = \{1,1,5/6,5/6\}.$$

Wobei der Abbildungsvektor p={1,-1,5/6,-5/6} entspricht.

Einfügung des Wasserzeichens

In das Ergebnis der Abbildungen RES_PROY wird ein Bit der Nachrichten oder ein Teil der Integritätsinformation eingefügt. Dieser Prozess wird in den Schritten 124 von FIG. 4, 145 von FIG. 5 und 168 von FIG. 6 jeweils für die IP-Adresse, die Zeitreferenz und die Integritätsinformation ausgeführt. Die drei Schritte sind analog und unterscheiden sich nur in der Information, welche in jeden eingeführt wird.

In dem System gemäß der vorliegenden Erfindung werden Techniken zur Kennzeichnung mit Wasserzeichen mit lateraler Information in dem Codierer angewendet und in der vorliegenden bevorzugten Beschreibung wird eine Technik angewendet, die auf skalaren gleichförmigen Quantoren und Codierung durch Wiederholung beruht.

Die einzufügenden Nachrichten werden mittels binärer Vektoren (ihre Elemente können nur die Werte {0,1} annehmen) dargestellt, in denen jedes Element für ein Informationsbit steht:

- Die Nachricht, die der IP-Adresse entspricht, ist mit $b_{IP}$ gekennzeichnet und weist eine Länge von 32 Bits auf, wobei dieser Wert in den Flussdiagrammen aus FIG. 4 und FIG. 7 durch N°BITS_IP gekennzeichnet ist.

- Die Nachricht der Zeitreferenz ist durch $b_{REF}$ gekennzeichnet und weist eine variable Länge auf, je nach der Kanalcodierung, die in Schritt 133 von FIG. 5 angewendet wird. Dieser Längenwert ist in FIG. 5 und FIG. 8 durch N°BITS_REF gekennzeichnet.

Die Integritätsinformation wird auch mittels eines binären Vektors $b_{INT}$ dargestellt, der den Wert einer Referenznachricht darstellt, wobei ein Bit in jeden Makroblock eingefügt wird, und folglich entspricht seine Länge der Anzahl von Makroblöcken des Bildes. Diese Referenznachricht ist willkürlich und muss dem Decoder bekannt sein, um ihr Vorhandensein in dem Bild überprüfen zu können.

Die Aufgabe des Verfahrens zur Kennzeichnung mit Wasserzeichen, das in dieser bevorzugten Ausführungsform beschrieben wird, ist die Codierung jeder Nachricht oder der Integritätsinformation in einem Vektor y, der für ein Codewort steht, das in das Originalbild eingefügt werden wird.

In dem Verfahren, das in dieser Beschreibung angewendet wird, beträgt jedes Codewort y das $L$-fache des binären Vektors, der für die einzufügende Nachricht steht, wobei $L$ die Wiederholungsrate ist, die für N°COEF_IP/LONG_IP, N°COEF_REF/LONG_REF oder N°COEF_INT/LONG_INT jeweils entsprechend der IP-Adresse, der Zeitreferenz oder der Integritätsinformation benutzt wird; im Allgemeinen ist $L$ für jede Nachricht oder die Integritätsinformation unterschiedlich. Das in dieser Beschreibung der bevorzugten Ausführungsform der Erfindung vorgeschlagene Verfahren zum Einfügen von Information in das Bild umfasst drei Schritte: Quantisierung, Erhalt von Fehlervektoren und Aktualisierung der Koeffizienten. Diese Schritte werden nachstehend im Detail beschrieben.

In dem ersten Schritt werden zur Einfügung einer Nachricht oder der Integritätsinformation der Länge $N$, die durch einen binären Vektor $\mathbf{b} = (b_1, b_2, ..., b_N)$ dargestellt sind, die Elemente $y_i$ des Codeworts y erzeugt, so dass für ein Element $y_i$ mit Index $i$ innerhalb des Intervalls $[(j-1) \cdot L + 1, j \cdot L]$ das Bit $b_j$ des entsprechenden binären Vektors $1 \leq j \leq N$ benutzt wird. Hierbei bezeichnet b die Vektoren $b_{IP}$ oder $b_{REF}$ für den Fall der Nachrichten oder $b_{INT}$ für die Integritätsinformation. Der $i$-te Wert wird wie folgt berechnet

$$y_i = Q_\Delta \left( x_i - \left( \frac{b_i}{2} + k_i \right) \cdot \Delta \right) + \left( \frac{b_i}{2} + k_i \right) \cdot \Delta \qquad (1)$$

worin $\Delta$ die so genannte Quantisierungsstufe ist, welche die durch den Kennzeichnungzprozess eingeführte Verzerrung bestimmt. Andererseits steht in dem vorherigen Ausdruck (1) $k_i$ für einen pseudozufälligen Wert, der in dem Intervall $[-1/2, 1/2]$ gleichmäßig verteilt ist und nur dem Codierer und dem Decoder bekannt ist; außerdem bezeichnet $x_i$ das Ergebnis der $i$-ten Abbildung RES_PROY des entsprechenden Einfügungsverfahrens in ein Bild entsprechend dem jeweiligen Einfügungsmodul der IP-Adresse (FIG. 4), dem der IP-Adresse (FIG. 5) oder dem der Integritätsinformation (FIG. 6), und worin $Q_D(x)$ für den Quantisierungsvorgang steht, der aufgrund der besonderen Struktur der Codewörter einfach wie folgt dargestellt wird

$$Q_\Delta(x) = \Delta \cdot \text{round}\left( \frac{x}{\Delta} \right).$$

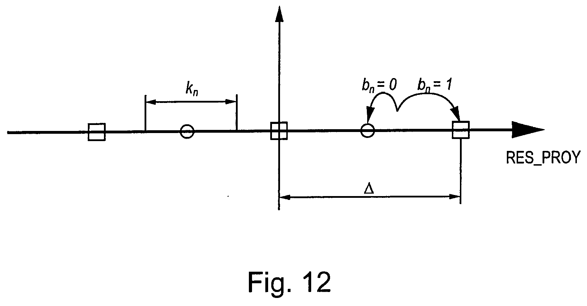

Der Erhalt von $y_i$ ist in FIG. 12 grafisch dargestellt, wobei die Kreise und die Vierecke die Rekonstruktionspunkte symbolisieren, welche jeweils für die Bits 0 und 1 stehen. Im Hinblick auf den pseudozufälligen Wert $k_i$ kann dieser ausgehend von dem Geheimschlüssel K oder ausgehend von der Zeitreferenz für die Nachrichten und ausgehend von dem Geheimschlüssel im Falle der Integritätsinformation erhalten werden. Im Allgemeinen wird ein anderer Wert $k_i$ für jeden Wert $x_i$ benutzt, um dem Kennzeichnungsverfahren Datenschutz bereitzustellen. Der Vektor, der aus den $k_i$ jeder Nachricht oder der Integritätsinformation besteht, wird durch $k_{IP}$ für die IP-Adresse, $k_{REF}$ für die Zeitreferenz und $k_{INT}$ für die Integritätsinformation dargestellt. Der zweite Schritt des Kennzeichnungsverfahrens besteht aus dem Erhalt des Fehlervektors der Quantisierung d, worin $d_i$ einfach wie folgt erhalten wird

$$d_i = y_i - x_i.$$

Jedes Element $d_i$ ist das Ergebnis der Schritte 124 (FIG. 4), 145 (FIG. 5) und 168 (FIG. 6).

Der dritte Schritt des Kennzeichnungsverfahrens ist die Aktualisierung, die ein Vorgang ist, mit dem der Wert jedes $d_i$ über alle Koeffizienten des Originalbildes verteilt wird, die zum Erhalt des Wertes $x_i$ benutzt worden sind (der einem bestimmten Wert RES_PROY entspricht). Die Aktualisierung wird in den Schritten 125 (FIG. 4), 146 (FIG. 5) und 169 (FIG. 6) ausgeführt. Es wird angenommen, dass die Koeffizienten des Bildes, die zum Erhalt mittels des Abbildungsvorgangs des Wertes RES_PROY benutzt worden sind, der zu $d_i$ in dem vorhergehenden Schritt geführt hat, in dem Vektor **c** = $(c_1, c_2 ..., c_M)$ angeordnet sind, worin $M$ gleich LONG_IP, LONG_REF oder LONG_INT ist, je nach dem, ob die eingefügte Nachricht jeweils der IP-Adresse, der Zeitreferenz oder der Integritätsinformation entspricht. Der Erhalt des $j$-ten gekennzeichneten Koeffizienten, der durch $c_j^\bullet$, gekennzeichnet ist, entspricht dem folgenden Ausdruck:

$$c_j^\bullet = c_j + \alpha \cdot \frac{d_i^\bullet}{p_j},$$

worin $d_i^\bullet = d_i / M$, $p_j$ das j-te Element des entsprechenden Abbildungsvektors ist (das heißt, $p_{IP}$, $p_{REF}$ oder $p_{INT}$), und $\alpha$ der so genannte Verzerrungskompensationsfaktor ist, der reale Werte in dem Intervall [0,1] annehmen kann. Durch Steuern des Wertes $\alpha$ kann zu einer Kompromisslösung zwischen der eingeführten Verzerrung und der Robustheit des Zeichens gefunden.

Zur Beendigung des Kennzeichnungsverfahrens werden die ursprünglichen Koeffizienten $c_j$ durch die gekennzeichneten Koeffizienten $c_j^\bullet$ ersetzt.

Durch JPEG eingeführte Verzerrung

Das digitale Bild, das aus der Veränderung der Koeffizienten bei der Einfügung von Information folgt, wird gemäß dem JPEG-Standard noch einmal codiert. Wie oben erwähnt, quantisiert der JPEG-Standard die Koeffizienten jedes 8x8-Blocks, die das Bild bilden, durch die Elemente der JPEG-Quantisierungsmatrix $Q_{JPEG}$, wobei ein Quantisierungsrauschen eingeführt wird.

Die Werte der $Q_{JPEG}$ müssen in dem Einfügungsverfahren der Information in das Bild bekannt sein, damit ein minimaler Wert der Stufengröße □ erstellt werden kann, der zum Einfügen der Information notwenig ist. Dieser Erzeugungsprozess der Elemente der Codewörter y ist in dem Ausdruck (1) beschrieben, wobei jede Stufengröße durch $\Delta_{IP}$, $\Delta_{REF}$ und $\Delta_{INT}$ durch jeweils für den Fall der Nachricht mit IP-Adresse, Nachricht mit Zeitreferenz und Nachricht mit Integritätsinformation gekennzeichnet ist.

Die Bestimmung der Größe der Stufen der Quantoren ($D_{IP}$, $D_{REF}$ und $D_{INT}$) hängt von dem minimalen Wert der Größe der Quantisierungsstufe von $Q_{JPEG}$ ab ($q_{IP, min}$, $q_{REF,min}$ oder $q_{INT,min}$,); dieser Wert dividiert die Koeffizienten, die zum Einfügen jedes Informationstyps benutzt werden. Auf diese Weise wird erreicht, dass die Kommunikation, die zwischen dem Codierer 100 und dem Decoder 200 erstellt wird, mit einer sehr geringen Verzerrung möglich ist. Die zu erfüllende Bedingung lautet

$$\Delta_{IP} \geq 2q_{IP,min},$$

$$\Delta_{REF} \geq 2q_{REF,min}$$

und

$$\Delta_{INT} \geq 2q_{INT,min}.$$

Unter Einhalten dieser Bedingung wird erreicht, dass die eingeführte Information der JPEG-Komprimierung bei einem bestimmten Qualitätsfaktor standhält, wobei dieser Faktor $Q_{JPEG}$ steuert. Dies wird mit Hilfe des nachfolgend beschriebenen Beispiels deutlich. Es wird ein Faktor $\alpha=1$ ohne Abbildung angenommen, wobei das Ergebnis des Quantisierungsfehlers für die Einführung eines Bits, dessen Wert null ist, der größtmögliche Wert $d=\Delta/2$ ist. Daraus folgt der gekennzeichnete Koeffizient $c^* =c+\Delta/2$. Wenn die oben erwähnte Bedingung nicht erfüllt würde, entspräche der erhaltene gekennzeichnete quantisierte Wert $c_{quant}^{\bullet}$ dem nicht gekennzeichneten ursprünglichen Wert $c_{quant}$, was in dem Decoder 200 einen Fehler hervorrufen würde, wenn der Wert des eingefügten Bits wiederhergestellt wird, da $\hat{c} = c_{quant}^{\bullet} \times q$ näher bei einem Codewort des untergeordneten Satze mit dem Wert eins liegt als bei demjenigen mit dem Wert null.

Extraktion der Information

Der Extraktionsprozess der eingefügten Information ähnelt dem Kennzeichnungsprozess und kann in zwei Etappen aufgeteilt werden. Zur Erläuterung wird von einer Anordnung von Vektoren von Koeffizienten $\mathbf{c} = (c_1, c_2..., c_M)$, $j = 1... N$ ausgegangen, die gekennzeichnet worden sind, um Information hinsichtlich des $j$-ten Bit einer Nachricht zu übertragen, die eine Gesamtlänge von $N$ Bits hat, wobei dieser Wert mit N°BITS_IP oder N°BITS_REF für jeweils die IP-Adresse und die Zeitreferenz oder die Anzahl von Makroblöcken des Bildes für die Integritätsinformation übereinstimmt. Außerdem ist der Wert $L$ die benutzte Wiederholungsrate, das heißt, N°COEF _IP/LONG_IP, N°COEF_REF/LONG_REF und N°COEF_INT/LONG_INT für jeweils die IP-Adresse, die Zeitreferenz und die Integritätsinformation.

Der erste Schritt des Decodierverfahrens besteht aus dem Erhalten eines Abstandsvektors VEC_DIS =$(v_1, v_2,..., v_N)$. Aus der Abbildung des Vektors $c_j$ mittels der geeigneten Parameter wird als Ergebnis ein Vektor $s_j$ der Länge L erhalten, mit $1\square j\square N$, wobei die Verkettung von $N$ Vektoren als bezeichnet wird. Der Wert $v_j$ wird mittels des folgenden Ausdrucks erhalten

$$v_j = \sum_{i=(j-1)\cdot L+1}^{j\cdot L} \left| Q_\Delta (s_i - k_i \cdot \Delta) - s_i + k_i \cdot \Delta \right|,$$

wobei die Werte $k_i$ und $\Delta$ oben definiert worden sind. Der Wert $v_j$ steht für einen absoluten Wert des Quantisierungsfehlers des Subvektors $s_j$ mit der Anordnung von Codewörtern, die für das Bit 0 in dem $j$-ten Bit stehen, wobei die Anordnung von Codewörtern die Vektorform $(\Delta(t_1 + k_1), \Delta(t_2 + k_2),..., \Delta(t_L + k_L))$ aufweist, worin $t_i$ eine ganze Zahl ist und die pseudozufälligen Werte $k_i$ mit denen übereinstimmen müssen, die in der Codierungsphase benutzt worden sind. Der Vorgang (2) wird in den Schritten 226 (FIG. 7), 246 (FIG. 8) und 264 (FIG. 9) ausgeführt. Je nach dem berücksichtigten Nachrichtentyp ist der folgende Schritt in dem Decodierverfahren wie nachfolgend beschrieben.

Zum Erhalt des j-ten Bits der IP-Adresse (Schritt 217 aus FIG. 7) lautet die Entscheidungsregel wie folgt

$$\hat{\mathbf{b}} = \begin{cases} 0, \text{ falls } v_j \leq L\Delta/4 \\ 1, \text{ falls } v_j > L\Delta/4 \end{cases},$$

das heißt, ein Kriterium des minimalen Abstands wird befolgt.

Die Nachricht bezüglich der Zeitreferenz wird gegen Fehler codiert, indem ein Kanalcode (zum Beispiel Konvolutionscode) benutzt wird. In diesem Fall ist der Abstandsvektor *VEC_DIS* der Eingang zu Block 235 aus FIG. 8, der den Ausgang des binären Vektors $\hat{b}_{REF}$, der für die berücksichtigte Nachricht steht.

In dem System, das in der vorliegenden Erfindung vorgeschlagen wird, wird die Erkennung zeitlicher Veränderungen in den davon verarbeiteten Bildern berücksichtigt. Dies tritt ein, wenn versucht wird, ein Bild zu modifizieren, oder eine Sequenz von Bildern ersetzt wird. Es wird mit Hilfe eines Zeitfensters umgesetzt, das aus gültigen Zeitreferenzen gebildet ist, die mit der extrahierten Zeitreferenz jedes Bildes verglichen werden müssen. Wenn sich die Zeitreferenz innerhalb des Fensters befindet, wird das Fenster mit dem Wert der neuen Zeitreferenz aktualisiert. Wenn die extrahierte Zeitreferenz nicht gültig ist, wird angezeigt, dass dieses bestimmte Bild oder diese bestimmte Sequenz nicht gültig ist.

Die Integritätsinformation wird in Schritt 261 von FIG. 9 extrahiert. In diesem Schritt wird der Abstand zwischen der Anordnung von Codewörtern, die mit einer Referenznachricht verbunden sind, und der abgebildeten Version der Koeffizienten, die für die Integrität des $j$-ten Makroblocks $s_j$ bestimmt sind, berechnet. Wenn dieser Abstand kleiner als ein Schwellenabstand ist, wird bestimmt, dass das Zeichen echt ist, und anderenfalls, das es bearbeitet worden ist.

Integrierung in Vorrichtungen

Es wird darauf hingewiesen, dass die Flussdiagramme keine spezielle Syntax und auch keine Programmiersprache benutzen. Vielmehr stellen sie die nötige Information dar, damit ein Fachmann integrierte Schaltungen herstellen oder die Software erzeugen kann, welche die notwenigen Prozesse ausführt. Zum Beispiel kann jede Funktion, die durch einen Block oder ein Flussdiagramm dargestellt ist, durch eine Softwarebefehlsanordnung, einen digitalen Zeichenprozessor DSP, eine digitale konfigurierbare FPGA-Schaltung, eine anwendungsspezifische Schaltung ASIC oder eine Kombination davon umgesetzt werden.

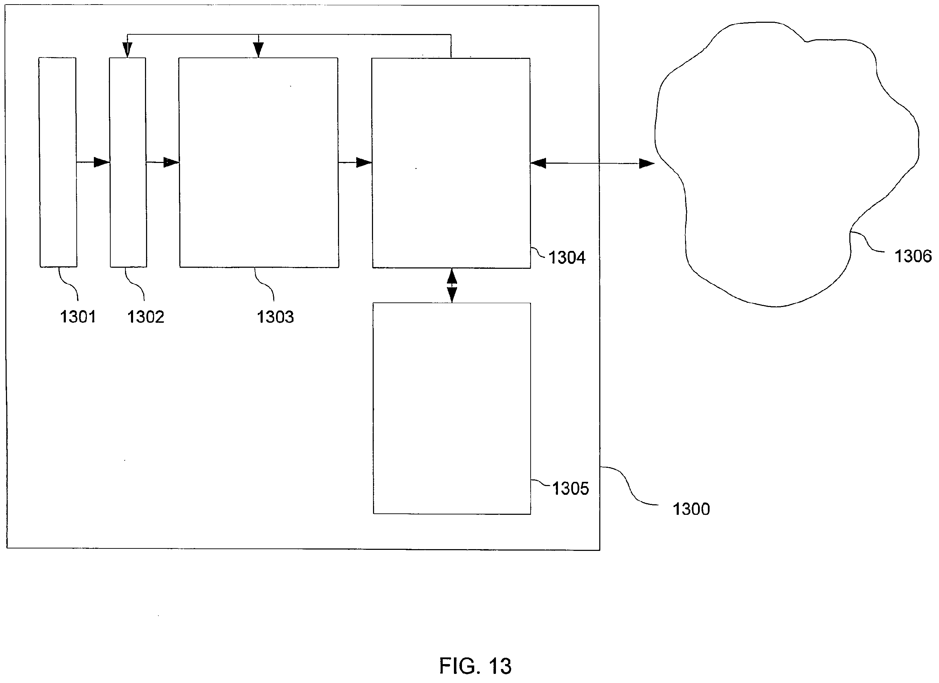

Zur Veranschaulichung einer möglichen Umsetzung der Einfügungsverfahren von Wasserzeichen gemäß der vorliegenden Erfindung ist in FIG. 13 ein Blockschema einer digitalen Netzkamera 1300 dargestellt. Die Kamera umfasst eine Linse 1301, welche ein Bild über einen Bildsensor 1302 fokussiert, eine Bilderzeugungsschaltung 1303, welche das von dem Bildsensor 1303 erfasste Bild benutzt und ein digitales, gemäß einem Standard (zum Beispiel JPEG) codiertes Bild erzeugt, und eine Steuerschaltung 1304, welche als eine ihrer Funktionen die Steuerung des Erhalts, die Erzeugung und die Codierung der Bilder hat, wobei eine andere ihrer Funktionen die Kommunikation mit einem Kommunikationsnetz 1306 ist. Außerdem kann die Steuerschaltung 1304 Vorgänge ausführen, die in einem Speicher 1305 gespeichert sind, in dem die notwenigen Vorgänge zum Ausführen der Einfügungsverfahren gemäß der Erfindung gespeichert sind. Im Allgemeinen macht die geringe Rechenkapazität der Steuerschaltungen, die in den derzeitigen digitalen Netzkameras vorhanden sind, die vorliegende Erfindung ideal, da sie einen erhöhten Sicherheitsgrad mit der Notwenigkeit einer niedrigen Anzahl von Vorgängen verbindet.

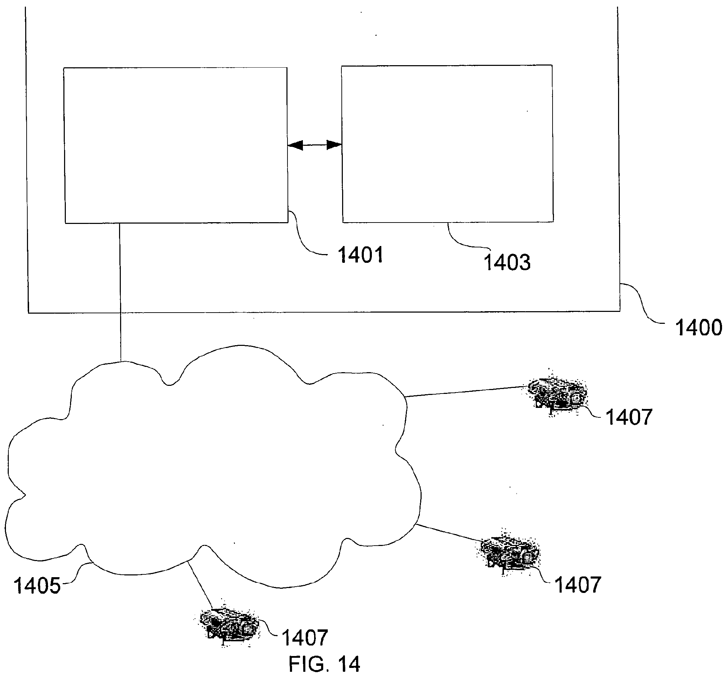

Die Verfahren zur Kennzeichnung mit Wasserzeichen zur Manipulationserkennung gemäß der vorliegenden Erfindung können in einem Datenverarbeitungssystem 1400 umgesetzt werden, wie in FIG. 14 dargestellt, in der solches System 1400 einen Prozessor 1401 und einen Speicher 1403 umfasst. Dieses System 1400 ist mit Vorrichtungen eines Überwachungssystems 1407 durch ein digitales Kommunikationsnetz 1405 verbunden. Der Prozessor 1401 führt die in dem Speicher 1403 gespeicherten Vorgänge aus; folglich können die beschriebenen Prozesse, die Teil der Verfahren zur Erkennung von Veränderungen sind, in diesen Systemen umgesetzt werden.

Zum Beispiel kann das Datenverarbeitungssystem 1400 ein Hauptrechner sein, der die Parameter der Digitalkameras steuert, welche das globale System bilden, oder einfach ein DSP, der konfiguriert ist, um Aufzeichnungen einer Datenbank zufällig zu analysieren.

**Patentansprüche**

1.  Verfahren zur Kennzeichnung eines digitalen Dokumentes, insbesondere eines digitalen Bildes, mit einem digitalen Wasserzeichen zur Manipulationserkennung unter Einfügung einer Integritätsinformation (150) und mindestens einer Nachricht mit mehreren Bits, wobei Blöcke des Bildes mit einem Geheimschlüssel (K) und Koeffizienten jedes Blockes ausgewählt werden, **dadurch gekennzeichnet, dass** das Verfahren die folgenden Schritte umfasst:

    - Umwandeln des digitalen Bildes in ein umgewandeltes digitales Bild,
    - Aufteilen des umgewandelten digitalen Bildes in mehrere Blöcke, wobei jeder Block mehrere Koeffizienten aufweist;
    - Bilden mehrerer abgebildeter Nachrichtenwerte für die mindestens eine Nachricht, wobei mehrere Koeffizienten auf einen von dem Geheimschlüssel ($K$) abhängigen Vektor abgebildet werden;
    - Einfügen jedes Bits jeder Nachricht in mindestens einen der abgebildeten Nachrichtenwerte;
    - Bilden mehrerer abgebildeter Integritätswerte für die Integritätsinformation (150), wobei mehrere Koeffizienten auf einen nachrichtenabhängigen Vektor abgebildet werden, wobei der nachrichtenabhängige Vektor aus mindestens einer der Nachrichten und dem Geheimschlüssel (K) abgeleitet wird;
    - Einfügen jedes Teils der Integritätsinformation (150) in mindestens einen der abgebildeten Integritätswerte;
    - Aktualisieren jedes Koeffizienten, der zum Bilden der abgebildeten Nachrichtenwerte benutzt wird, mit den eingefügten abgebildeten Nachrichtenwerten, wodurch erreicht wird, dass die Abbildung der aktualisierten ersten Koeffizienten auf den geheimschlüsselabhängigen Vektor und die eingefügten abgebildeten Nachrichtenwerte identisch sind;
    - Aktualisieren jedes Koeffizienten, der zum Berechnen der abgebildeten Integritätswerte benutzt wird, mit den eingefügten abgebildeten Integritätswerten, wodurch erreicht wird, dass die Abbildung der aktualisierten Integritätskoeffizienten auf den nachrichtenabhängigen Vektor und die eingefügten abgebildeten Integritätswerte identisch sind,
    - das Einfügen eines jedes Teils der Integritätsinformation (150) wird berechnet, indem die abgebildeten Integritätswerte einer Quantisierung unterzogen werden, wobei ein Rasterquantor mit einer vorbestimmten Stufengröße verwendet wird und die Zentroide des Rasterquantors mit einem Verlagerungsvektor bewegt werden, der mit mindestens einer der Nachrichten und dem Geheimschlüssel (K) synchronisiert ist;
    - das Einfügen jedes Bits jeder Nachricht wird berechnet, indem die abgebildeten Nachrichtenwerte einer Quantsierung unterzogen werden, wobei ein Rasterquantor mit einer vorbestimmten Stufengröße verwendet wird und die Zentroide des Rasterquantors mit einem Verlagerungsvektor bewegt werden, der mit dem Geheimschlüssel (K) synchronisiert ist, und

- Synchronisieren der Einfügung und Extraktion der Integritätsinformation (150) durch Initialisieren eines pseudozufälligen Integritätsgenerators mit einem Wert, der eine Funktion einer Zeitreferenz (130) und des Geheimschlüssels (K) ist.

2. Verfahren nach Anspruch 1, **dadurch gekennzeichnet, dass** jeder der mehreren vorbestirrimten Koeffizienten, der zum Einfügen der Nachrichten benutzt wird, mit dem Geheimschlüssel (K) pseudozufällig ausgewählt wird.

3. Verfahren nach Anspruch 1, **dadurch gekennzeichnet, dass** jeder Wert des nachricht unabhängigen Vektors, der eine spezifische Position in dem nachrichtenabhängigen Vektor aufweist, und jeder Wert des geheimschlüsselabhängigen Vektors, der eine spezifische Position in dem geheimschlüsselabhängigen Vektor aufweist, um einen Faktor gewichtet wird, wobei der Faktor aus der spezifischen Position jedes Wertes in dem Vektor abgeleitet wird.

4. Verfahren nach Anspruch 3, **dadurch gekennzeichnet, dass** das digitale Bild mit einem digitalen Bildstandard codiert und ein codiertes digitales Bild erhalten wird, wobei der digitale Bildstandard ausgewählt ist aus der Gruppe, bestehend aus dem JPEG-Standard und einem beliebigen der MPEG-Standards; jeder Koeffizient codiert wird, indem er durch einen Wert der Quantisierungstabelle des Standards dividiert wird, wobei der Wert der Quantisierungstabelle eine Funktion der Position des Koeffizienten in dem konkreten Block ist, zu welchem er gehört; und der Wert jedes Faktors, der einen konkreten Wert des abhängigen Vektors gewichtet, eine Funktion des Wertes der Quantisierungstabelle ist, welche einen konkreten Koeffizienten in das codierte Bild aufteilt, wobei der konkrete Koeffizient den konkreten Wert des abhängigen Vektors beim Abbilden in den Schritten des Erhaltens der mehreren abgebildeten Werte multipliziert.

5. Verfahren nach Anspruch 1, **dadurch gekennzeichnet, dass** eine der Nachrichten eine Zeitreferenz (130) ist.

6. Verfahren nach Anspruch 1, **dadurch gekennzeichnet, dass** eine der Nachrichten ein eindeutiger Bezeichner einer Vorrichtung ist, wobei die Vorrichtung das digitale Bild erfasst.

7. Verfahren zur Kennzeichnung eines digitalen Dokuments, insbesondere eines digitalen Bildes, mit einem Wasserzeichen zur Manipulationserkennung, wobei Daten aus dem digitalen Bild mit Wasserzeichen extrahiert werden und die Daten Integritätsinformation (150) und mindestens eine Nachricht mit mehreren Bits sind, wobei Blöcke des Bildes mit einem Geheimschlüssel (K) und Koeffizienten jedes Blockes ausgewählt werden, **dadurch gekennzeichnet, dass** das Verfahren die folgenden Schritte umfasst:

- Transformieren des digitalen Bildes in ein transformiertes digitales Bild, -
- Aufteilen des transformierten digitalen Bildes in mehrere Blöcke, wobei jeder Block mehrere Koeffizienten aufweist;
- Bilden mehrerer abgebildeter Werte für jede der Nachrichten, wobei mehrere Koeffizienten auf einen von dem Geheimschlüssel (K) abhängigen Vektor abgebildet werden;
- Extrahieren mehrerer Bits jeder Nachricht aus den abgebildeten Nachrichtenwerten;
- für jede Nachricht, Bestimmen einer rekonstruierten Nachricht auf der Grundlage der Bits, die aus jeder Nachricht extrahiert werden;
- Erhalten mehrerer abgebildeter Integritätswerte für die Integritätsinformation, wobei mehrere Koeffizienten auf einen nachrichtenabhängigen Vektor abgebildet werden, der aus mindestens einer der rekonstruierten Nachrichten und dem Geheimschlüssel (K) abgeleitet wird;
- Extrahieren mehrerer Teile der Integritätsinformation (150) aus den mehreren abgebildeten Integritätswerten;
- Bestimmen, ob das digitale Bild mit Wasserzeichen verändert worden ist, wobei die extrahierten Teile der Integritätsinformation analysiert werden,
- das Extrahieren mehrerer Teile der Integritätsinformation (150) wird berechnet, indem die abgebildeten Integritätswerte einer Quantisierung unterzogen werden, wobei ein Rasterquantor mit einer vorbestimmten Stufengröße verwendet wird und die Zentroide des Rasterquantors mit einem Verlagerungsvektor bewegt werden, der mit mindestens einer der rekonstruierten Nachrichten und dem Geheimschlüssel (K) synchronisiert ist;
- das Extrahieren mehrerer Bits jeder Nachricht aus den abgebildeten Werten wird berechnet wird, indem der abgebildete Nachrichtenwert einer Quantisierung unterzogen wird, wobei ein Rasterquantor mit einer vorbestimmten Stufengröße verwendet wird und die Zentroide des Rasterquantors mit einem Verlagerungsvektor bewegt werden, der mit dem geheimen Schlüssel synchronisiert ist, und
- Synchronisieren der Einfügung und Extraktion der Integritätsinformation (150) durch Initialisieren eines pseudozufälligen Integritätsgenerators mit einem Wert, der eine Funktion einer Zeitreferenz (130) und des Geheimschlüssels (K) ist.

8. Verfahren nach Anspruch 7, **dadurch gekennzeichnet, dass** jeder der mehreren vorbestimmten Koeffizienten, der zum Decodieren der rekonstruierten Nachricht benutzt wird, mit dem Geheimschlüssel (K) pseudozufällig ausgewählt wird.

9. Verfahrten nach Anspruch 7, **dadurch gekennzeichnet, dass** jeder Wert des nachrichtenabhängigen Vektors, der eine spezifische Position in dem nachrichtenabhängigen Vektor aufweist, und jeder Wert des geheimschlüsselabhängigen Vektors, der eine spezifische Position in dem geheimschlüsselabhängigen Vektor aufweist, um einen Faktor gewichtet wird, wobei der Faktor aus der spezifischen Position jedes Wertes in dem Vektor abgeleitet wird.

10. Verfahren nach Anspruch 9, **dadurch gekennzeichnet, dass** das digitale Bild mit einem digitalen Bildstandard codiert und ein codiertes digitales Bild erhalten wird, wobei der digitale Bildstandard ausgewählt ist aus der Gruppe, bestehend aus dem JPEG-Standard und einem beliebigen der MPEG-Standards; jeder Koeffizient codiert wird, indem er durch einen Wert der Quantisierungstabelle des Standards dividiert wird, wobei der Wert der Quantisierungstabelle eine Funktion der Position des Koeffizienten in dem konkreten Block ist, zu welchem er gehört; und der Wert jedes Faktors, der einen konkreten Wert des abhängigen Vektors gewichtet, eine Funktion des Wertes der Quantisierungstabelle ist, welche einen konkreten Koeffizienten in das codierte Bild aufteilt, wobei der konkrete Koeffizient den konkreten Wert des abhängigen Vektors beim Abbilden in den Schritten des Erhaltens der mehreren abgebildeten Werte multipliziert.

11. Verfahren nach Anspruch 7, **dadurch gekennzeichnet, dass** eine der Nachrichten eine Zeitreferenz (130) ist, die benutzt wird, um zu entscheiden, ob das digitale Bild mit Wasserzeichen in einem gültigen Zeitraum erhalten wurde oder eine Zeitmanipulation erlitten hat.

12. Verfahren nach Anspruch 7, **dadurch gekennzeichnet, dass** die eine der Nachrichten ein eindeutiger Bezeichner einer Vorrichtung ist, wobei die Vorrichtung das Bild erfasst; wobei der eindeutige Bezeichner benutzt wird, um zu überprüfen, ob das digitale Bild verändert wurde oder nicht.

13. Digitale Netzkamera (1300), **dadurch gekennzeichnet, dass** sie Folgendes umfasst:

   - eine Linse (1301) zum Fokussieren eines Bildes über einen Bildsensor (1302);
   - eine Bilderzeugungsschaltung (1303) zum Erzeugen eines digitalen Bildes ausgehend von einem Bild, das von dem Bildsensor (1302) erfasst worden ist;
   - eine Steuerschaltung (1304) zum Steuern der Kommunikation zwischen der Digitalkamera (1300) und dem Netz (1306), mit dem sie verbunden ist, wobei die Steuerschaltung (1304) in der Weise ausgestaltet ist, dass sie ein Verfahren nach einem der Ansprüche 1 bis 6 ausführt.

14. Datenverarbeitungssystem, das einen Prozessor (1401) und einen Speicher (1403) aufweist, **dadurch gekennzeichnet, dass** es ein Verfahren nach einem der Ansprüche 1 bis 6 und/oder ein Verfahren nach einem der Ansprüche 7 bis 12 ausführt.

15. Datenverarbeitungssystem nach Anspruch 14, **dadurch gekennzeichnet, dass** es in einem Videoüberwachungssystem integriert ist.

## Claims

1. Method for marking a digital document, more particularly a digital image, with a digital watermark for manipulation detection while inserting integrity information (150) and at least one message having a plurality of bits, blocks of the image being selected with a secret key (K) and coefficients of each block, **characterised in that** the method comprises the steps of:

   - converting the digital image to a converted digital image,
   - dividing up the converted digital image into a plurality of blocks, each block having a plurality of coefficients;
   - establishing a plurality of mapped message values for the at least one message, a plurality of coefficients being mapped onto a vector which depends on the secret key (K);
   - inserting each bit of each message into a least one of the mapped message values;

- establishing a plurality of mapped integrity values for the integrity information (150), a plurality of coefficients being mapped onto a message-dependent vector, the message-dependent vector being derived from at least one of the messages and the secret key (K);
- inserting each piece of the integrity information (150) into at least one of the mapped integrity values;
- updating each coefficient which is used for establishing the mapped message values with the inserted mapped message values, thereby achieving that the mapping of the updated first coefficients onto the secret key-dependent vector and the inserted mapped message values are identical;
- updating each coefficient which is used to calculate the mapped integrity values with the inserted mapped integrity values, thereby achieving that the mapping of the updated integrity coefficients onto the message-dependent vector and the inserted mapped integrity values are identical,
- calculating the insertion of each piece of the integrity information (150) by subjecting the mapped integrity values to a quantisation, a lattice quantifier with a predetermined step size being used and the centroids of the lattice quantifier being moved with a displacement vector synchronised with at least one of the messages and the secret key (K);
- calculating the insertion of each bit of each message by subjecting the mapped message values to a quantisation, a lattice quantifier with a predetermined step size being used and the centroids of the lattice quantifier being moved with a displacement vector synchronised with the secret key (K), and
- synchronising the insertion and extraction of the integrity information (150) by initialising a pseudo-random integrity generator having a value which is a function of a time reference (130) and the secret key (K).

2. Method according to claim 1, **characterised in that** each coefficient of the plurality of predetermined coefficients used to insert the messages is selected pseudo-randomly with the secret key (K).

3. Method according to claim 1, **characterised in that** each value of the message-dependent vector having a specific position in the message-dependent vector and each value of the secret key-dependent vector having a specific position in the secret key-dependent vector are weighted by a factor, the factor being derived from the specific position of each value in the vector.

4. Method according to claim 3, **characterised in that** the digital image is coded with a standard of digital image and a coded digital image is obtained, the standard of digital image being selected from the group consisting of the JPEG standard and any of the MPEG standards; each coefficient is coded by dividing it by a value of the quantisation table of the standard, the value of the quantisation table is a function of the position of the coefficient in the particular block to which it belongs; and the value of each factor which weights a particular value of the dependent vector is a function of the value of the quantisation table which divides a particular coefficient into the coded image, the particular coefficient multiplying the particular value of the dependent vector during mapping in the steps of obtaining the plurality of mapped values.

5. Method according to claim 1, **characterised in that** one of the messages is a time reference (130).

6. Method according to claim 1, **characterised in that** one of the messages is a unique identifier of a device, the device detecting the digital image.

7. Method for marking a digital document, more particularly a digital image, with a watermark for manipulation detection, data being extracted from the digital image with watermarks and the data being integrity information (150) and at least one message having a plurality of bits, blocks of the image being selected with a secret key (K) and coefficients of each block, **characterised in that** the method comprises the steps of:

- transforming the digital image to a transformed digital image,
- - dividing the transformed digital image into a plurality of blocks, each block having a plurality of coefficients;
- establishing a plurality of mapped values for each one of the messages, a plurality of coefficients being mapped onto a vector which depends on the secret key (K);
- extracting a plurality of bits of each message from the mapped message values;
- for each message, determining a reconstructed message based on the bits extracted from each message;
- obtaining a plurality of mapped integrity values for the integrity information, a plurality of coefficients being mapped onto a message-dependent vector derived from at least one of the reconstructed messages and the secret key (K);
- extracting a plurality of pieces of the integrity information (150) from the plurality of mapped integrity values;
- determining whether the digital image with watermarks has been altered, the extracted pieces of the integrity information being analysed,

- calculating the extraction of a plurality of pieces of the integrity information (150) by subjecting the mapped integrity values to a quantisation, a lattice quantifier with a predetermined step size being used and the centroids of the lattice quantifier being moved with a displacement vector synchronised with at least one of the reconstructed messages and the secret key (K);

- calculating the extraction of a plurality of bits of each message from the mapped values by subjecting the mapped message value to a quantisation, a lattice quantifier with a predetermined step size being used and the centroids of the lattice quantifier being moved with a displacement vector synchronised with the secret key, and

- synchronising the insertion and extraction of the integrity information (150) by initialising a pseudo-random integrity generator having a value which is a function of a time reference (130) and the secret key (K).

8. Method according to claim 7, **characterised in that** each coefficient of the plurality of predetermined coefficients used to decode the reconstructed message is selected pseudo-randomly with the secret key (K).

9. Method according to claim 7, **characterised in that** each value of the message-dependent vector having a specific position in the message-dependent vector and each value of the secret key-dependent vector having a specific position in the secret key-dependent vector are weighted by a factor, the factor being derived from the specific position of each value in the vector.

10. Method according to claim 9, **characterised in that** the digital image is coded with a standard of digital image and a coded digital image is obtained, the standard of digital image being selected from the group consisting of the JPEG standard and any of the MPEG standards; each coefficient is coded by dividing it by a value of the quantisation table of the standard, the value of the quantisation table being a function of the position of the coefficient in the particular block to which it belongs; and the value of each factor which weights a particular value of the dependent vector is a function of the value of the quantisation table which divides a particular coefficient into the coded image, the particular coefficient multiplying the particular value of the dependent vector during mapping in the steps of obtaining the plurality of mapped values.

11. Method according to claim 7, **characterised in that** one of the messages is a time reference (130) which is used to decide whether the digital image with watermarks was obtained in a valid time period or suffered a time manipulation.

12. Method according to claim 7, **characterised in that** the one of the messages is a unique device identifier, the device detecting the image; the unique identifier being used to verify whether or not the digital image was altered.

13. Digital network camera (1300) **characterised in that** it comprises:

- a lens (1301) to focus an image via an image sensor (1302);
- an image generation circuit (1303) to generate a digital image from an image detected by the image sensor (1302);
- a control circuit (1304) to control the communication between the digital camera (1300) and the network (1306) to which it is connected, the control circuit (1304) being configured such that it carries out a method according to any one of claims 1 to 6.

14. Data processing system comprising a processor (1401) and a memory (1403), **characterised in that** it carries out a method according to any one of claims 1 to 6 and/or a method according to any one of claims 7 to 12.

15. Data processing system according to claim 14, **characterised in that** it is integrated in a video surveillance system.

**Revendications**

1. Procédé de marquage d'un document numérique, notamment d'une image numérique, à l'aide d'une marque filigranée numérique destinée à détecter une manipulation, par insertion d'une information d'intégrité (150) et d'au moins un message comprenant plusieurs bits, dans lequel des blocs de l'image sont sélectionnés à l'aide d'un code secret (K) et de coefficients de chaque bloc, **caractérisé en ce que** le procédé comprend les étapes suivantes:

- conversion de l'image numérique en une image numérique convertie,
- division de l'image numérique convertie en plusieurs blocs, chaque bloc présentant plusieurs coefficients;
- formation de plusieurs valeurs de messages représentées pour l'au moins un message, plusieurs coefficients étant représentés sur un vecteur dépendant du code secret (K);
- insertion de chaque bit de chaque message dans au moins une des valeurs de message représentées;
- formation de plusieurs valeurs d'intégrité représentées pour l'information d'intégrité(150), plusieurs coefficients étant représentés sur un vecteur dépendant de messages, le vecteur dépendant de messages étant déduit d'au moins un des messages et du code secret (K);
- insertion de chaque partie de l'information d'intégrité (150) dans au moins une des valeurs d'intégrité représentées;
- actualisation de chaque coefficient utilisé pour former les valeurs de message représentées, à l'aide des valeurs de message représentées insérées, sur quoi on obtient que la représentation des premiers coefficients actualisés sur le vecteur dépendant du code secret et les valeurs de message insérées représentées sont identiques;
- actualisation de chaque coefficient utilisé pour le calcul des valeurs d'intégrité représentées, à l'aide des valeurs d'intégrité insérées représentées, sur quoi on obtient que la représentation des coefficients d'intégrité actualisés sur le vecteur dépendant de messages et les valeurs d'intégrité insérées représentées sont identiques;
- l'insertion de chacune des parties de l'information d'intégrité (150) est calculée du fait que les valeurs d'intégrité représentées sont soumises à une quantification, un quantificateur de trame ayant une grandeur d'échelon prédéterminée étant utilisé, et les centroïdes du quantificateur de trame étant déplacés à l'aide d'un vecteur de déplacement qui est synchronisé avec au moins l'un des messages et le code secret (K);
- l'insertion de chaque bit de chaque message est calculée du fait que les valeurs de message représentées sont soumises à une quantification, un quantificateur de trame ayant une grandeur d'échelon prédéterminée étant utilisé, et les centroïdes du quantificateur de trame étant déplacés à l'aide d'un vecteur de déplacement qui est synchronisé avec le code secret (K), et
- synchronisation de l'insertion et extraction de l'information d'intégrité (150) par l'initialisation d'un générateur d'intégrité pseudo-aléatoire à l'aide d'une valeur qui est une fonction d'une référence de temps (130) et du code secret (K).

2. Procédé selon la revendication 1, **caractérisé en ce que** chacun des plusieurs coefficients prédéterminés, qui est utilisé pour insérer les messages, est sélectionné de manière pseudo-aléatoire à l'aide du code secret (K).

3. Procédé selon la revendication 1, **caractérisé en ce que** chaque valeur du vecteur dépendant de messages, qui présente une position spécifique dans le vecteur dépendant de messages, et chaque valeur du vecteur dépendant du code secret, qui présente une position spécifique dans le vecteur dépendant du code secret, sont pondérées d'un facteur, dans lequel le facteur est déduit de la position spécifique de chaque valeur dans le vecteur.

4. Procédé selon la revendication 3, **caractérisé en ce que** l'image numérique est codée à l'aide d'une norme d'image numérique et **en ce qu'**elle obtient une image numérique codée, dans lequel la norme d'image numérique est sélectionnée dans le groupe constitué de la norme JPEG et d'une norme quelconque des normes MPEG; dans lequel chaque coefficient est codé du fait qu'il est divisé par une valeur du tableau de quantification de la norme, dans lequel la valeur du tableau de quantification est une fonction de la position du coefficient dans le bloc concret auquel il appartient; et dans lequel la valeur de chaque facteur qui pondère une valeur concrète du vecteur dépendant, est une fonction de la valeur du tableau de quantification, laquelle divise un coefficient concret en l'image codée; dans lequel le coefficient concret multiplie la valeur concrète du vecteur dépendant lors de la représentation dans les étapes d'obtention des plusieurs valeurs représentées.

5. Procédé selon la revendication 1, **caractérisé en ce que** l'un des messages est une référence de temps (130).

6. Procédé selon la revendication 1, **caractérisé en ce que** l'un des messages est un identificateur univoque d'un dispositif, dans lequel le dispositif détecte l'image numérique.

7. Procédé de marquage d'un document numérique, notamment d'une image numérique, à l'aide d'une marque filigranée destinée à détecter une manipulation, dans lequel des données provenant de l'image numérique à marque filigranée sont extraites et dans lequel les données sont une information d'intégrité (150) et au moins un message comprenant plusieurs bits, dans lequel des blocs de l'image sont sélectionnés à l'aide d'un code secret (K) et de coefficients de chaque bloc, **caractérisé en ce que** le procédé comprend les étapes suivantes:

- transformation de l'image numérique en une image numérique transformée,
- division de l'image numérique transformée en plusieurs blocs, chaque bloc présentant plusieurs coefficients;
- formation de plusieurs valeurs représentées pour chacun des messages, plusieurs coefficients étant représentés sur un vecteur dépendant du code secret (K);
- extraction de plusieurs bits de chaque message à partir des valeurs de message représentées;
- pour chaque message, détermination d'un message reconstitué sur la base des bits extraits de chaque message;
- obtention de plusieurs valeurs d'intégrité représentées pour l'information d'intégrité, plusieurs coefficients étant représentés sur un vecteur dépendant de messages, qui est déduit d'au moins un des messages reconstitués et du code secret (K);
- extraction de plusieurs parties de l'information d'intégrité (150) à partir des plusieurs valeurs d'intégrité représentées;
- détermination si l'image numérique à marque filigranée a été modifiée, d les parties extraites de l'information d'intégrité étant analysées,
- l'extraction de plusieurs parties de l'information d'intégrité (150) est calculée du fait que les valeurs d'intégrité représentées sont soumises à une quantification, un quantificateur de trame ayant une grandeur d'échelon prédéterminée étant utilisé, et les centroïdes du quantificateur de trame étant déplacés à l'aide d'un vecteur de déplacement qui est synchronisé avec au moins l'un des messages reconstitués et avec le code secret (K);
- l'extraction de plusieurs bits de chaque message à partir des valeurs représentées est calculée du fait que les valeurs de message représentées sont soumises à une quantification, un quantificateur de trame ayant une grandeur d'échelon prédéterminée étant utilisé, et les centroïdes du quantificateur de trame étant déplacés à l'aide d'un vecteur de déplacement qui est synchronisé avec le code secret (K), et
- synchronisation de l'insertion et extraction de l'information d'intégrité (150) par l'initialisation d'un générateur d'intégrité pseudo-aléatoire à l'aide d'une valeur qui est une fonction d'une référence de temps (130) et du code secret (K).

8. Procédé selon la revendication 7, **caractérisé en ce que** chacun des plusieurs coefficients prédéterminés, utilisés pour décoder le message reconstitué, est sélectionné de manière pseudo-aléatoire à l'aide du code secret (K).

9. Procédé selon la revendication 7, **caractérisé en ce que** chaque valeur du vecteur dépendant de messages, qui présente une position spécifique dans le vecteur dépendant de messages, et chaque valeur du vecteur dépendant du code secret, qui présente une position spécifique dans le vecteur dépendant du code secret, sont pondérées d'un facteur, dans lequel le facteur est déduit de la position spécifique de chaque valeur dans le vecteur.

10. Procédé selon la revendication 9, **caractérisé en ce que** l'image numérique est codée à l'aide d'une norme d'image numérique et **en ce qu'**elle obtient une image numérique codée, dans lequel la norme d'image numérique est sélectionnée à partir du groupe constitué de la norme JPEG et d'une norme quelconque des normes MPEG; dans lequel chaque coefficient est codé du fait qu'il est divisé par une valeur du tableau de quantification de la norme, dans lequel la valeur du tableau de quantification est une fonction de la position du coefficient dans le bloc concret auquel il appartient; et dans lequel la valeur de chaque facteur qui pondère une valeur concrète du vecteur dépendant, est une fonction de la valeur du tableau de quantification, laquelle divise un coefficient concret en l'image codée; dans lequel le coefficient concret multiplie la valeur concrète du vecteur dépendant lors de la représentation dans les étapes d'obtention des plusieurs valeurs représentées.

11. Procédé selon la revendication 7, **caractérisé en ce que** l'un des messages est une référence de temps (130) utilisée pour décider si l'image numérique à marque filigranée a été obtenue pendant une période de temps valide ou si elle a subi une manipulation temporelle.

12. Procédé selon la revendication 7, **caractérisé en ce que** l'un des messages est un identificateur univoque d'un dispositif, dans lequel le dispositif détecte l'image, dans lequel l'identificateur univoque est utilisé pour vérifier si l'image numérique a été modifiée ou non.

13. Caméra de réseau numérique (1300), **caractérisée en ce qu'**elle comprend les éléments suivants:

- une lentille (1301) destinée à focaliser une image par l'intermédiaire d'un capteur d'images (1302);
- un circuit de production d'image (1303) destiné à produire une image numérique à partir d'une image détectée par le capteur d'image (1302);
- un circuit de commande (1304) destiné à commander la communication entre la caméra numérique (1300) et le réseau (1306) auquel elle est reliée, le circuit de commande (1304) étant conçu de manière à ce qu'il exécute un procédé selon l'une quelconque des revendications 1 à 6.

14. Système de traitement de données présentant un processeur (1401) et une mémoire (1403), **caractérisé en ce qu'**il exécute un procédé selon l'une quelconque des revendications 1 à 6 et/ou un procédé selon l'une quelconque des revendications 7 à 12.

15. Système de traitement de données selon la revendication 14, **caractérisé en ce qu'**il est intégré dans un système de surveillance vidéo.

FIG. 1

FIG. 2

R

200

K

210

230

250

W

FIG. 3

28

Fig. 4

Fig. 5

**Fig. 6**

Beginn

151 — Synchronisations-funktion der Zeitreferenz und des Geheimschlussels K

152 — i=0

153 — i<ALTO/N → Nein → Ende

Ja

154 — j=0

155 — i=i+1

156 — j<ANCHO/M → Nein

Ja

157 — Erzeugung des Vektors VEC_INT, der aus N°COEF_INT/(N*M) Koeffizienten jedes Makroblocks gebildet wird

158 — j=j+1

159 — COEF=0

160 — COEF< N°COEF_INT → Nein

Ja

161 — Erzeugung des Längenabbildungsvektors LONG_IP

162 — Skalares Produkt des Abbildungsvektors und des Vektors von Koeffizienten, der durch die Koeffizienten VEC_INT, deren Indizes zwischen COEF und COEF+LONG_INT-1 liegen, wobei das Ergebnis in RES_PROY gespeichert wird

163 — COEF=COEF+LONG_INT

168 — Einfügung eines Teils der Integritätsinformation in RES_PROY

169 — Aktualisierung der Koeffizienten

Beginn

211 — Erste Ausführung?

Ja

Nein

212 — Pseudozufällige Auswahl von Blöcken

213 — BIT=0

215 — BIT=BIT+1

214 — BIT<N°BITS_IP

Nein — Ende

Ja

216 — COEF=0

217 — Decodieren des Bits der IP-Adresse der Position BIT mit VEC_DIS

Nein

218 — COEF< N°COEF_IP

Ja

219 — Erzeugung des Längenabbildungsvektors

220 — Skalares Produkt des Abbildungsvektors und des Vektors von Koeffizienten, der durch die Koeffizienten gebildet ist, deren Indizes zwischen (N°BITS_IP x BIT)+COEF und (N°BITS_IP x BIT)+COEF+LONG_IP-1 liegen, wobei das Ergebnis in RES_PROY gespeichert wird

221 — COEF=COEF+LONG_IP

226 — Speichern des Abstands von RES_PROY in VEC_DIS an der Position COEF/LONG_IP

Fig. 7

Fig. 8

**Beginn**

231 — Erste Ausführung? — Ja → 232 Pseudozufällige Auswahl von Blöcken

Nein

233 — BIT=0

234 — BIT<N°BITS_REF — Nein → 235 Decodierung mittels VEC_DIS → Ende

Ja

COEF=0 — 237

236 — BIT=BIT+1

238 — COEF< N°COEF_REF — Nein

Ja

239 — Erzeugung des Längenabbildungsvektors LONG_REF

240 — Skalares Produkt des Abbildungsvektors und des Vektors von Koeffizienten, der durch die Koeffizienten gebildet wird, deren Indizes zwischen (N°BITS_REF x BIT)+COEF und (N°BITS_REF x BIT)+COEF+LONG_REF-1 liegen, wobei das Ergebnis in RES_PROY gespeichert wird

244 — COEF=COEF+LONG_REF

246 — Speichern des Abstands von RES_PROY in VEC_DIS an der Position COEF/LONG_REF+BIT* ( N°COEF_REF/LONG_REF)

Fig. 9

FIG. 10

1101

1102

FIG. 11

Fig. 12

FIG. 13

FIG. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004131184 A
- EP 1001604 A
- US 2003172275 A
- US 2004071311 A

**In der Beschreibung aufgeführte Nicht-Patentliteratur**

- **B. CHEN Y.** Quantization Index Modulation: A Class of Provably Good Methods for Digital Watermarking and Information Embedding. *IEEE Transactions on Information Theory,* 04. Mai 2001, vol. 47
- **FERNANDO PÉREZ-GONZÁLEZ ; FÉLIX BALADO ; JUAN R. HERNÁNDEZ.** Performance analysis of existing and new methods for data hiding with known-host information in additive channels. *IEEE Transactions on Signal Processing,* April 2003, vol. 51 (4), 960-980
- **JOACHIM J. EGGERS ; ROBERT BÄUML ; TOMAS TZSCHOPPE ; BERND GIROD.** Scalar Costa Scheme for Information Embedding. *IEEE Transactions on Signal Processing,* April 2003, vol. 51 (4